(19) Europäisches Patentamt
European Patent Office
Office européen des brevets

(11) **EP 3 828 524 B1**

(12) **EUROPÄISCHE PATENTSCHRIFT**

(45) Veröffentlichungstag und Bekanntmachung des Hinweises auf die Patenterteilung:
**15.11.2023   Patentblatt 2023/46**

(21) Anmeldenummer: **20204230.5**

(22) Anmeldetag: **28.10.2020**

(51) Internationale Patentklassifikation (IPC):
**G01K 17/08** (2006.01)        **G01K 17/06** (2006.01)

(52) Gemeinsame Patentklassifikation (CPC):
**G01K 17/08; G01K 17/06**

(54) **ANORDNUNG ZUR VERBRAUCHSWERTERFASSUNG UND VERFAHREN ZUR PARAMETRIERUNG EINES HEIZKOSTENVERTEILERS**

ASSEMBLY FOR DETECTING CONSUMPTION AND METHOD FOR PARAMETERIZING A HEATING COST DISTRIBUTOR

AGENCEMENT DE DÉTERMINATION DES VALEURS DE CONSOMMATION ET PROCÉDÉ DE PARAMÉTRISATION D'UN RÉPARTITEUR DE FRAIS DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2019   DE 102019218260**

(43) Veröffentlichungstag der Anmeldung:
**02.06.2021   Patentblatt 2021/22**

(73) Patentinhaber: QUNDIS GmbH
**99098 Erfurt (DE)**

(72) Erfinder: **KUHN, Jens**
**98693 Ilmenau (DE)**

(74) Vertreter: **Liedtke & Partner Patentanwälte**
**Gerhart-Hauptmann-Straße 10/11**
**99096 Erfurt (DE)**

(56) Entgegenhaltungen:
**EP-A2- 1 592 948      EP-B1- 1 592 948**
**DE-A1- 19 800 041**

**Beschreibung**

Die Erfindung betrifft eine Anordnung zur Verbrauchswerterfassung. Weiterhin betrifft die Erfindung ein Verfahren zur Parametrierung eines Heizkostenverteilers. Darüber hinaus betrifft die Erfindung einen Heizkostenverteiler selbst.

Aus der EP 1 592 948 B1 ist ein Verfahren zur Parametrierung eines Heizkostenverteilers bekannt. Im Falle eines Austausches beispielsweise eines defekten Altgeräts durch ein Neugerät in einer Abrechnungseinheit ist eine Parametrierung des Neugeräts vorgesehen, so dass eine Arbeitsweise bzw. ein Messverhalten des Neugeräts mit dem des Altgeräts übereinstimmt. Dies bedeutet, dass die Arbeitsweise bzw. das Messverhalten zur Verbrauchswerterfassung des zu ersetzenden Altgeräts durch das Neugerät so simuliert wird, dass die ermittelten Verbrauchswerte identisch sind.

Aus der DE 10 2005 032 834 A1 ist ein Verfahren und ein Heizkostenverteiler zur Erfassung des Heizwärmeverbrauchs bei Heizkörpern bekannt, wobei Startbedingungen des Heizkostenverteilers bei dessen Montage an einem Heizkörper in den Heizkostenverteiler einprogrammiert werden. Aus der DE 198 00 041 A1 ist ein Verfahren zur Bestimmung der dem c-Wert zugrunde liegenden Werte bekannt.

Im Allgemeinen wird das Zählverhalten eines Heizkostenverteilers durch vier thermische Übergänge entscheidend beeinflusst. Den thermischen Übergang vom Heizkörper zur Montageplatte, von der Montageplatte zum Heizkörpersensor und, falls vorhanden, von der Montageplatte zum Raumtemperatursensor und vom Raumtemperatursensor zur Raumluft. Berücksichtigt werden diese thermischen Übergänge bei der Ermittlung des Verbrauchswertes des Heizkostenverteilers durch die so genannten c-Werte. Die c-Werte korrigieren die gemessenen Temperaturen bzw. die Differenztemperatur von Heizkörpertemperatur- und Raumtemperatursensor auf die wahren Temperaturen bzw. die wahre Temperaturdifferenz. Jede Veränderung bei einem der thermischen Übergänge führt zu einer Veränderung der c-Werte. Da die c-Werte messtechnisch für jede abweichende Anordnung, insbesondere für jeden neuen Heizkörper, jede neue Montageplatte und jeden neuen Heizkostenverteiler sehr aufwendig messtechnisch ermittelt werden müssen, wäre es wünschenswert bereits ermittelte c-Werte für neue Anordnungen von Heizkörper, Montageplatte und Heizkostenverteiler aus bereits gemessenen Anordnungen ableiten zu können.

Der Erfindung liegt die Aufgabe zu Grunde, eine gegenüber dem Stand der Technik verbesserte Anordnung zur Verbrauchswerterfassung, ein verbessertes Verfahren zur Parametrierung eines Heizkostenverteilers und einen verbesserten Heizkostenverteiler anzugeben. Insbesondere ist es Aufgabe der Erfindung, eine Anordnung zur Verbrauchswerterfassung und ein Verfahren zur Parametrierung eines Heizkostenverteilers anzugeben, welche einen Austausch von Heizkostenverteilern vereinfacht und aufwendige Messungen vermeidet.

Hinsichtlich der Anordnung zur Verbrauchswerterfassung mit zumindest einer Montageplatte wird die Aufgabe erfindungsgemäß mit den Merkmalen des Anspruchs 1 gelöst. Hinsichtlich des Verfahrens wird die Aufgabe erfindungsgemäß mit den Merkmalen des Anspruchs 10 gelöst. Hinsichtlich der Verwendung eines Heizkostenverteilers wird die Aufgabe erfindungsgemäß mit den Merkmalen des Anspruchs 14 gelöst.

Vorteilhafte Ausgestaltungen der Erfindung sind Gegenstand der Unteransprüche.

Die erfindungsgemäße Anordnung zur Verbrauchswerterfassung in einer Abrechnungseinheit, insbesondere in einer Liegenschaft oder einem Gebäude, umfasst zumindest eine Mehrzahl von, insbesondere identischen oder verschiedenen, Montageplatten, eine Mehrzahl von, insbesondere identischen oder verschiedenen, Heizkörpern und eine Mehrzahl von, insbesondere identischen oder verschiedenen, Heizkostenverteilern und eine Mehrzahl von thermischen Kopplungsanordnungen, wobei an jedem Heizkörper jeweils eine Montageplatte montiert ist und an jeder Montageplatte auf der vom Heizkörper abgewandten Seite der Montageplatte ein Heizkostenverteiler montiert ist. Dabei bilden jeweils ein Heizkörper und die an diesem montierte Montageplatte sowie der an der Montageplatte auf der zum Heizkörper abgewandten Seite montierte Heizkostenverteiler zusammen eine der thermischen Kopplungsanordnungen.

Dabei ist in jedem Heizkostenverteiler wenigstens ein c-Wert mindestens einer der thermischen Kopplungsanordnungen hinterlegt, wobei der jeweilige c-Wert eine thermische Ankopplung zwischen dem jeweiligen Heizkostenverteiler, dem jeweiligen Heizkörper und der zwischen diesen angeordneten Montageplatte beschreibt, wobei die Anordnung wenigstens einen neuen Heizkostenverteiler umfasst und bei dem wenigstens einen neuen Heizkostenverteiler der hinterlegte c-Wert einer der thermischen Kopplungsanordnungen ein von einem c-Wert einer anderen thermischen Kopplungsanordnung (= Heizkörper-Montageplatte-Heizkostenverteiler-Anordnung) abgeleiteter c-Wert ist. Der Erfindung liegt die Überlegung zu Grunde, dass bei Montageplatten mit im Wesentlichen gleicher thermischer Kopplung zu den Heizkörpern und zwei unterschiedlichen Heizkostenverteilern ein eindeutiger funktionaler Zusammenhang zwischen den c-Werten der beiden verschiedenen thermischen Kopplungsanordnungen (= Heizkörper-Montageplatte-Heizkostenverteiler-Anordnungen) gegeben ist.

Unter einer im Wesentlichen gleichen thermischen Kopplung zwischen Montageplatte und Heizkörper wird insbesondere eine Fertigungs- und Materialzusammensetzungstoleranzen berücksichtigende thermische Kopplung zwischen den Komponenten Heizkörper und Montageplatte verstanden. Dabei wird die vorhandene Montageplatte beispielsweise durch eine neue Montageplatte ersetzt, wobei die neue Montageplatte identisch oder im Wesentlichen heizkörperseitig baugleich, insbesondere in Form, Größe und/oder Material weitgehend gleich, ausgestaltet ist.

Unter einem Heizkostenverteiler wird insbesondere ein Heizkostenverteiler für die Verbrauchserfassung von Raumheizflächen-Geräten gemäß DIN EN 834 verstanden. Der Heizkostenverteiler dient der Erfassung der anteiligen Wärmeabgabe von Heizkörpern in Nutzeinheiten oder Abrechnungseinheiten einer Liegenschaft oder eines Gebäudes.

Der c-Wert ist ein Maß für den Grad der thermischen Ankopplung des Heizkostenverteilers über die Montageplatte an den Heizkörper und/oder an die Raumtemperatur. Insbesondere berücksichtigt der c-Wert die thermische Ankopplung des Temperatursensors oder der Temperatursensoren des jeweiligen Heizkostenverteilers über die Montageplatte an die zu erfassenden Temperaturen am Heizkörper und/oder an die Raumtemperatur. Der c-Wert ist beispielsweise als Temperaturdifferenz-Verhältnis definiert. Der c-Wert wird dabei zur Parametrierung des Heizkostenverteilers und insbesondere für eine Ermittlung von Temperaturwerten und gegebenenfalls zur Anpassung und Korrektur der gemessenen Temperaturwerte und zur Ermittlung daraus resultierender Verbrauchswerte unter Berücksichtigung der thermischen Ankopplung der jeweiligen thermischen Kopplungsanordnung verwendet.

Der erfasste Verbrauchswert ist insbesondere ein Näherungswert für die in einer Messzeit von einer Heizfläche eines Heizkörpers abgegebene und vom Nutzer verbrauchte Wärme. Der Verbrauchswert berücksichtigt dabei Eigenschaften des Heizkörpers (wie zum Beispiel Nennleistung, Heizkörperexponent) sowie zusätzliche Bewertungsfaktoren und die Montage (wie zum Beispiel Höhe). Aus diesem Grunde muss der jeweilige Heizkostenverteiler individuell parametriert werden. Die Anforderungen an die Parametrierung eines Heizkostenverteilers mit Ein- oder Zweifühlersystem sind allgemein in der DIN EN 834 beschrieben.

Die mit der Erfindung erzielten Vorteile bestehen insbesondere darin, dass zum Beispiel beim vollständigen Austausch einer alten Heizkostenverteiler-Generation durch eine neue Heizkostenverteiler-Generation, beispielsweise bei einem Austausch von Nicht-Funk-Heizkostenverteilern durch Funk-Heizkostenverteiler, die alten (vorhandenen) Montageplatten auf den Heizkörpern verbleiben können, wobei die neuen c-Werte aus den alten c-Werten abgeleitet werden. Die dadurch erzielten Einsparungen betreffen dann in Summe die Kosten für die neuen Montageplatten, die De- und Neumontage der Montageplatten sowie die Ermittlung der c-Werte für die neuen Kopplungsanordnungen. Insbesondere letzteres ist von großem Nutzen, da die für den alten Heizkostenverteiler vorhandene c-Wert-Datenbank nicht für den neuen Heizkostenverteiler neu im Labor erstellt werden muss, sondern über die funktionale Beziehung der c-Werte abgeleitet werden kann.

Vorteilhaft kann die Erfindung auch auf die Verwendung von Ersatzgeräten angewandt werden, denn sie ermöglicht den Mischverbau unterschiedlicher Heizkostenverteiler indem sie es ermöglicht, über die funktionale Beziehung zwischen den c-Werten der alten thermischen Kopplungsanordnung und den abgeleiteten c-Werten der neuen thermischen Kopplungsanordnung die Temperaturmesswerte so zu korrigieren, dass der neue Heizkostenverteiler dieselben Temperaturen bzw. Temperaturdifferenzen berechnet wie der alte Heizkostenverteiler, auch wenn der neue Heizkostenverteiler einen völlig anderen Aufbau besitzt.

Die Erfindung geht dabei von der Überlegung aus, dass verschiedene Heizkostenverteiler montiert auf Montageplatten, mit identischer thermischer Kopplung zum jeweiligen Heizkörper, für verschiedene oder identische Heizkörper einen definierten funktionalen Zusammenhang der c-Werte aufweisen, so dass für einen, insbesondere neu zu installierenden, Heizkostenverteiler abweichender Bauart bei von für vorhandene Heizkostenverteiler hinterlegten c-Werten für eine Vielzahl von Heizkörpern bei Montageplatten mit identisch thermischer Ankopplung an die verschiedenen Heizkörper keine weiteren c-Wert-Messungen erforderlich sind, wenn dieser funktionale Zusammenhang einmalig ermittelt wurde und somit bekannt ist. Mit anderen Worten: Für den neu zu installierenden Heizkostenverteiler wird der hinterlegte c-Wert eines der vorhandenen Heizkostenverteilers anhand des funktionalen Zusammenhangs angepasst und als ein entsprechend abgeleiteter c-Wert verwendet.

In einer möglichen Ausführungsform ist der Heizkostenverteiler, dessen hinterlegter c-Wert der von einer anderen thermischen Kopplungsanordnung abgeleitete c-Wert ist, ein Ersatzgerät für einen ausgetauschten oder auszutauschenden oder vorhandenen Heizkostenverteiler mit derselben Montageplatte. Insbesondere ist dieselbe Montageplatten auf demselben Heizkörper montiert. Dabei weist dieselbe Montageplatte eine identische Struktur auf der dem Heizkörper zugewandten Seite auf. Dabei ist der hinterlegte c-Wert des als Ersatzgerät fungierenden Heizkostenverteilers von dem hinterlegten c-Wert des, insbesondere ursprünglich, ausgetauschten oder auszutauschenden oder vorhandenen Heizkostenverteilers einer der anderen thermischen Kopplungsanordnungen abgeleitet und somit ein neuer abgeleiteter c-Wert. In der einfachen Ausführungsform wird als c-Wert für den als Ersatzgerät fungierenden Heizkostenverteiler der hinterlegte c-Wert des auszutauschenden oder vorhandenen Heizkostenverteilers verwendet. Alternativ kann der hinterlegte c-Wert anhand des funktionalen Zusammenhangs von c-Werten verschiedener thermischen Kopplungsanordnungen angepasst werden. Beispielsweise kann der hinterlegte c-Wert mittels mindestens eines Korrekturfaktors angepasst werden, der beispielsweise einen linearen Zusammenhang zwischen den c-Werten aller thermischen Kopplungsanordnungen (aller Heizkörper-Montageplatte-Heizkostenverteiler-Anordnungen) in der Anordnung beschreibt.

Dieser so angepasste c-Wert wird als abgeleiteter c-Wert gespeichert und für den neuen, insbesondere als Zusatz- oder Ersatzgerät fungierenden, Heizkostenverteiler verwendet.

Darüber hinaus kann der Heizkostenverteiler, dessen hinterlegter c-Wert der von einer anderen thermischen Kopplungsanordnung (Heizkörper-Montageplatte-Heizkostenverteiler-Anordnung) abgeleitete c-Wert ist, ein Ersatz- oder Zusatzgerät für einen auszutauschenden oder vorhandenen Heizkostenverteiler mit einer neuen und zur vorhandenen Montageplatte gleichen Montageplatte sein. Dabei wird unter einer gleichen Montageplatte insbesondere eine baugleiche Montageplatte verstanden, welche beispielsweise in Form, Größe und/oder Material der vorhandenen Montageplatte entspricht, die durch die neue gleiche Montageplatte ausgetauscht oder ersetzt werden soll oder die zu vorhandenen Montagplatten ergänzt werden soll. Somit setzt sich die neue thermische Kopplungsanordnung aus demselben Heizkörper einer neuen, im Wesentlichen gleichen Montageplatte und einem neuen Heizkostenverteiler zusammen. Der neue Heizkostenverteiler, zum Beispiel ein Zusatz- oder Ersatz-Heizkostenverteiler, kann sich dabei wesentlich von dem vorhandenen oder auszutauschenden Heizkostenverteiler, also z. B. in der Art, Anzahl und/oder Anordnung der Temperatursensoren, unterscheiden.

Beispielsweise ist der Ersatz- oder Zusatz-Heizkostenverteiler auf einer neuen oder zusätzlichen Montageplatte, aus dem gleichen Material und mit einer zumindest heizkörperseitig gleichen Struktur, insbesondere Oberflächenstruktur, auf der dem vorhandenen oder einem zusätzlichen Heizkörper zugewandten Seite und optional mit einer zumindest gleichen Struktur, insbesondere Oberflächenstruktur auf der der Montageplatte zugewandten Seite montiert. Dabei wird angenommen, dass die thermische Kopplung zwischen

- dieser neuen oder zusätzlichen Montageplatte mit im Wesentlichen gleicher Struktur auf der dem Heizkörper zugewandten Seite zur Oberflächenstruktur der vorhandenen oder auszutauschenden Montageplatte und
- diesem Heizkörper mit optionaler im Wesentlichen gleicher Struktur auf der der Montageplatte zugewandten Seite identisch zu einer thermischen Kopplung zwischen einer anderen Montageplatte, mit einer zumindest gleichen Struktur auf der dem Heizkörper zugewandten Seite und einem Heizkörper mit einer zumindest gleichen Struktur auf der der Montageplatte zugewandten Seite ist. Dabei ist der hinterlegte c-Wert des neuen, insbesondere als Ersatz- oder Zusatzgerät, fungierenden Heizkostenverteilers vom hinterlegten c-Wert von der vorhandenen thermischen Kopplungsanordnung (Heizkörper-Montageplatte-Heizkostenverteiler-Anordnung) der anderen Montageplatte, mit der zumindest gleichen Struktur auf der dem Heizkörper zugewandten Seite, abgeleitet (= abgeleiteter c-Wert).

In einer möglichen Ausführungsform weist die jeweilige Montageplatte zumindest eine Oberflächenstruktur auf, mittels welcher diese thermisch mit dem Heizkörper gekoppelt ist. Insbesondere weist die jeweilige Montageplatte ein definiertes Oberflächenprofil auf, das für eine möglichst gute thermische Kopplung mit dem Oberflächenprofilen möglichst vieler Heizkörper optimiert ist, und weist auf der dem Heizkostenverteiler zugewandten Seite ein entsprechendes Oberflächenprofil auf, das für die optimale Kopplung der Heizkörpersensoren verschiedener Heizkostenverteiler ausgelegt ist.

In einer weiteren Ausführungsform umfasst der Heizkostenverteiler eine Messelektronik und mindestens einen Speicher zur Hinterlegung des c-Wertes oder der c-Werte, insbesondere der vorhandenen und/oder abgeleiteten c-Werte, und/oder eine Datenschnittstelle zum Datenaustausch.

Die Montageplatte ist insbesondere eingerichtet und konfiguriert für einen Mischverbau oder zum Ersatz von bereits vorhandenen Montageplatten. Beispielsweise können in einer Liegenschaft vorhandene Montageplatten zusammen mit neuen, im Wesentlichen baugleichen Montageplatten eingesetzt werden.

Darüber hinaus kann der Heizkostenverteiler für einen Mischverbau mit oder zum Ersatz von bereits vorhandenen Heizkostenverteilern konfiguriert und eingerichtet sein. Beispielsweise können in einer Liegenschaft vorhandene oder alte Heizkostenverteiler zusammen mit neuen, im Aufbau abweichenden Heizkostenverteilern eingesetzt werden.

Des Weiteren können die Montageplatte und die Heizkostenverteiler miteinander, beispielsweise als eine Montageeinheit, gekoppelt sein und für einen Mischverbau mit oder zum vollständig Ersatz von bereits vorhandenen Heizkostenverteilern mit Montageplatten, konfiguriert und eingerichtet sein. Mit anderen Worten: Es kann eine auf einem vorhandenen Heizkörper montierte vorhandene (alte) Montageplatte kombiniert werden mit einem neuen Heizkostenverteiler, der einen völlig anderen Aufbau besitzt. Auch kann auf einem vorhandenen Heizkörper eine neue, baugleiche Montageplatte und auf dieser wiederum ein neuer Heizkostenverteiler mit abweichendem Aufbau montiert sein. Darüber hinaus kann ein neuer, baugleicher Heizkörper mit einer vorhandenen Montageplatte und einem vorhandenen Heizkostenverteiler kombiniert werden. Auch kann bei Erweiterung der Liegenschaft ein neuer, baugleicher Heizkörper mit einer neuen, baugleichen Montageplatte und einem neuen Heizkostenverteiler mit abweichendem Aufbau verbaut sein.

Das erfindungsgemäße Verfahren zur Parametrierung eines Heizkostenverteilers zur Bestimmung eines anteiligen Wärmeverbrauchs einer Nutzeinheit bezogen auf einen gesamten Wärmeverbrauch in einer Abrechnungseinheit und/oder einem Gebäude sieht vor, dass eine Mehrzahl von Heizkörpern und eine Mehrzahl von, im Wesentlichen gleichen Montageplatten sowie eine Mehrzahl von Heizkostenverteilern sowie eine Anzahl von thermischen Kopplungsanordnungen, die jeweils aus einem Heizkörper und einer an diesem montierten Montageplatte und einem auf der vom Heizkörper abgewandten Seite der Montageplatte montierten Heizkostenverteiler gebildet sind, bereitgestellt werden, wobei an jedem Heizkörper jeweils eine Montageplatte, insbesondere mit zumindest gleicher Struktur auf der dem Heizkörper zugewandten Seite, montiert wird und an jeder Montageplatte ein Heizkostenverteiler montiert wird, und wobei in jedem Heizkostenverteiler wenigstens ein c-Wert mindestens einer der thermischen Kopplungsanordnungen hinterlegt ist, wobei der jeweilige c-Wert eine thermische Ankopplung zwischen dem jeweiligen Heizkörper, dem jeweiligen Heizkostenverteiler und der zwischen diesen angeordneten Montageplatte beschreibt, wobei wenigstens bei einem der Heizkostenverteiler eine der thermischen Kopplungsanordnungen als c-Wert ein von einem c-Wert einer der anderen thermischen Kopplungsanordnungen abgeleiteter c-Wert hinterlegt wird. Der abgeleitete oder neue c-Wert ist dabei zur Parametrierung des neuen Heizkostenverteilers und insbesondere für eine Ermittlung, zum Beispiel eine Korrektur der gemessenen Temperaturwerte und eine Ermittlung daraus resultierender Verbrauchsdaten verwendbar.

In einer weiteren Ausführungsform ist der Heizkostenverteiler, dessen hinterlegter c-Wert der von einer anderen thermischen Kopplungsanordnung (Heizkörper-Montageplatte-Heizkostenverteiler-Anordnung) abgeleitete oder identischer neuer c-Wert ist, ein Ersatzgerät für einen ausgetauschten oder auszutauschenden oder vorhandenen Heizkostenverteiler mit derselben Montageplatte, wobei der abgeleitete c-Wert des als Ersatzgerät fungierenden Heizkostenverteilers von dem c-Wert des ausgetauschten bzw. auszutauschenden bzw. vorhandenen Heizkostenverteilers mit derselben Montageplatte abgeleitet wird.

Alternativ oder zusätzlich ist der Heizkostenverteiler, dessen c-Wert der von einer der anderen thermischen Kopplungsanordnungen abgeleitete c-Wert ist, ein Zusatzgerät für eine, insbesondere zusätzliche und/oder neue Montageplatte, welche gleich, insbesondere baugleich zu einer der anderen Montageplatten ausgestaltet ist. Beispielsweise weist die neue, gleiche Montageplatte eine zumindest gleiche Struktur auf der einem zusätzlichen und/oder neuen Heizkörper zugewandten Seite auf, wie die bereits vorhandene und gleiche Montageplatte. Hierdurch ist die thermische Kopplung zwischen dieser zusätzlichen und/oder neuen Montageplatte und diesem zusätzlichen und/oder neuen Heizkörper im Wesentlichen gleich zu der thermischen Kopplung zwischen der anderen vorhandenen und gleichen Montageplatte und deren Heizkörper, so dass der abgeleitete c-Wert des als Ersatz- oder Zusatzgerät fungierenden Heizkostenverteilers von dem c-Wert der anderen vorhandenen thermischen Kopplungsanordnung abgeleitet wird.

Dabei wird der beispielsweise neue oder zusätzliche Heizkostenverteiler unter Verwendung des abgeleiteten c-Wertes so parametriert, dass er die Arbeitsweise und das Messverhalten des alten bzw. ausgetauschten Heizkostenverteilers simuliert.

Der Heizkostenverteiler zur Bestimmung eines anteiligen Wärmeverbrauchs in einer Nutzeinheit bezogen auf einen gesamten Wärmeverbrauch in einer Abrechnungseinheit wird erfindungsgemäß in einer Anordnung nach einem der Ansprüche 1 bis 9 verwendet und ist oder wird gemäß dem oben beschriebenen Verfahren kalibriert oder parametriert. Hierzu ist der abgeleitete c-Wert in einem Speicher gespeichert.

Die Anordnung zur Verbrauchswerterfassung umfasst zumindest eine Montageplatte, die mit unterschiedlichen und/oder bereits vorhandenen, insbesondere parametrierbaren, Heizkostenverteilern koppelbar ist. Dabei weist die Montageplatte eine Oberflächenstruktur auf, mittels welcher eine gute thermische Ankopplung zu möglichst vielen Heizkörperprofilen bereitgestellt ist.

Dabei sind die Montageplatte und die Heizkostenverteiler beispielsweise zu einer Verbrauchswerterfassungseinheit zusammensetzbar und können eine Montageeinheit bilden. Alternativ kann der neue, als Ersatz- oder Zusatzgerät dienende Heizkostenverteiler auf einen bereits vorhandenen Heizkörper mit bereits vorhandener Montageplatte montiert werden. Die Montageplatte ist insbesondere als Rückseite bzw. Rückenteil der Verbrauchswerterfassungseinheit ausgebildet. Der Heizkostenverteiler, insbesondere ein elektronischer Heizkostenverteiler, ist beispielsweise als ein Vorderteil der Verbrauchswerterfassungseinheit ausgebildet und umfasst eine Erfassungsvorrichtung, insbesondere in Form einer Messelektronik.

Der Heizkostenverteiler wird oder ist auf die Montageplatte montiert, beispielsweise aufgesteckt und verplombt oder in anderer Art und Weise form- und kraftschlüssig gehalten und verplombt. Die Montageplatte kann beispielsweise aus Metall gebildet sein. Der Heizkostenverteiler kann ein Gehäuse umfassen, das als ein Vorderteil ausgebildet ist. Das Gehäuse ist beispielsweise aus Kunststoff gebildet. Die Montageplatte bildet beispielsweise ein Rückteil, das dem Heizkörper zugewandt ist. Zudem kann der Heizkostenverteiler auf einer dem Heizkörper abgewandten Seite eine Anzeigevorrichtung zum Ablesen von Daten, wie Verbrauchswerten und/oder anderen Messwerten oder Daten, aufweisen.

Heizkostenverteiler sind zum Beispiel in einer oder mehreren Wohnungen, welche Abrechnungseinheiten darstellen, an Heizkörpern installiert. Die Wohnung/en ist bzw. sind Teil einer Liegenschaft oder eines Gebäudes.

Insbesondere ist der jeweilige Heizkostenverteiler messtechnisch kompatibel und parametrierbar. Beispielsweise ist der Heizkostenverteiler ein elektronischer Heizkostenverteiler. Insbesondere ist der Heizkostenverteiler ein elektronisches Gerät zur Heizkostenverteilung durch Erfassen einer anteiligen Wärmeabgabe eines Heizkörpers. Eine solche Verbrauchswerterfassungseinheit, insbesondere ein solcher Heizkostenverteiler, ist für einen dezentralen Einsatz konzipiert. Eine Messwerterfassung findet beispielsweise über einen oder zwei oder mehr Temperaturfühler oder -sensoren, beispielsweise einen Heizkörper- und/oder einen Raumlufttemperaturfühler, statt. Beispielsweise wird im Zweifühlerbetrieb der tatsächliche Temperaturunterschied zwischen einer Umgebungstemperatur und einer Heizkörpertemperatur ermittelt. Im Einfühlerbetrieb wird beispielsweise für die Umgebungstemperatur ein konstanter Wert angenommen.

Derartige Anordnungen werden beispielsweise in Mehrfamilienhäusern, Büro- und Verwaltungsgebäuden eingesetzt. Zum Beispiel ist die Anordnung, insbesondere die Montageplatte, verwendbar an verschiedenen Heizkörpern, wie Gliederheizkörpern (Radiatoren), Röhrenradiatoren, Plattenheizkörpern mit beispielsweise waagrechter und senkrechter Wasserführung, Rohrregister-Heizkörpern und/oder Konvektoren, montierbar.

Der erfindungsgemäße Heizkostenverteiler ermöglicht beispielsweise den im Allgemeinen nicht erlaubten Mischverbau, da er auf der Basis der abgeleiteten c-Werte und der Simulation des Messverhaltens des zu ersetzenden Heizkostenverteilers, auf identischen oder zumindest gleichen Heizkörpern bzw. auf Heizkörpern mit identischer oder zumindest gleicher Oberflächenstruktur der der Montageplatte zugewandten Seite einen identischen oder zumindest gleichen Verbrauchswert berechnet. Dabei kann die alte Montageplatte des zu ersetzenden Heizkostenverteilers oder eine neue mit gleicher Oberflächenstruktur der Heizkörper zugewandten Seite und der erfindungsgemäße Heizkostenverteiler mit einer bereits vorhandenen und verwendeten Verbrauchswerterfassungseinheit (gemischt) verbaut werden.

Beispielsweise wird die vorhandene Montageplatte an dem vorhandenen Heizkörper belassen und der vorhandene Heizkostenverteiler demontiert und ein neuer Heizkostenverteiler montiert, wobei der c-Wert von der vorhandenen thermischen Kopplungsanordnung als abgeleiteter c-Wert für den neuen Heizkostenverteiler zur Parametrierung verwendet wird.

Alternativ kann eine zusätzliche oder neue Montageplatte mit identischer thermischer Ankopplung, d.h. identischer Oberflächenstruktur der dem Heizkörper zugewandten Seite und identischer Materialzusammensetzung, an den vorhandenen oder einen zusätzlichen Heizkörper, mit identischer Oberflächenstruktur der der Montageplatte zugewandten Seite, montiert werden und auf diese Montageplatte mit identischer thermischer Ankopplung an den Heizkörper als Zusatzgerät ein, insbesondere neuer Heizkostenverteiler montiert werden, wobei der abgeleitete c-Wert des als Zusatzgerät fungierenden Heizkostenverteilers von der thermischen Kopplungsanordnung der alten Montageplatte und dem Heizkörper mit identischer thermischer Ankopplung zur Parametrierung des neuen Heizkostenverteilers übernommen wird.

Durch die Hinterlegung und Verwendung von c-Werten anderer thermischer Kopplungsanordnungen als abgeleitete c-Werte für ein Zusatz- oder Ersatzgerät als Heizkostenverteiler kann ein hoher messtechnischer Aufwand zur Ermittlung der c-Werte unterschiedlicher Heizkörper in Verbindung mit den Zusatz- oder Ersatz Heizkostenverteilern auf einem zugelassenen Heizkörperprüfstand reduziert oder gar vermieden werden.

Durch eine Verwendung von Montageplatten mit identischer oder zumindest gleicher thermischer Ankopplung am Heizkörper und von abgeleiteten c-Werten für als Ersatz- oder Zusatzgeräte fungierende Heizkostenverteiler, insbesondere messtechnisch kompatible, parametrierbare Heizkostenverteiler, kann ein messtechnischer Aufwand zur Parametrierung dieser Heizkostenverteiler, insbesondere die Ermittlung von Daten zur beispielsweise Berücksichtigung der thermischen Ankopplung, c-Werte, weitestgehend verringert werden. Insbesondere kann eine Übertragbarkeit (Umrechnung) der die thermische Ankopplung beschreibenden Parameter, wie des c-Wertes, von einer vorhandenen thermischen Kopplungsanordnung auf eine neue thermische Kopplungsanordnung weitestgehend ermöglicht werden.

Unter thermischer Ankopplung bzw. thermischer Kopplung wird im Allgemeinen ein Austausch von Wärme zwischen Systemen und vorliegend zwischen der Montageplatte und dem Heizkörper einerseits und zwischen der Montageplatte und dem Heizkostenverteiler, insbesondere dessen Heizkörpertemperatursensor, andererseits sowie, falls vorhanden, zwischen dem Raumtemperatursensor und der Montageplatte sowie zwischen dem Raumtemperatursensor und der Raumluft andererseits verstanden. Dabei wird der Wärmeaustausch zwischen dem Heizkostenverteiler und dem Heizkörper im Wesentlichen durch den Wärmeaustausch zwischen der Montageplatte und dem Heizkörper bestimmt.

Um einen Wärmeübergang von einem Heizkörper auf den Heizkostenverteiler möglichst verlustlos zu gestalten, ist die Montageplatte vorgesehen. Beispielsweise ist die Montageplatte eine Wärmeleitplatte aus einem thermisch gut leitenden Material, beispielsweise Aluminium. Die Montageplatte wird beispielsweise mittels Schweißbolzen direkt auf dem Heizkörper installiert oder montiert.

Zur Charakterisierung der thermischen Ankopplung eines Heizkostenverteilers, mit einer Montageplatte an einem Heizkörper montiert, wird vorliegend als c-Wert ein abgeleiteter c-Wert angesetzt, der wie folgt bestimmt wird:

$$c_n = 1 - \frac{\Delta t_{Sn}}{\Delta t} \qquad\qquad (1)$$

wobei $\Delta t$ = Heizmediumübertemperatur, $\Delta t_S$ = Temperaturdifferenz der Sensoren, z. B. $t_{HS}-t_{RS}$ mit $t_{HS}$ = Heizkörpersensortemperatur =Temperatur des heizkörperseitigen Sensors, $t_{RS}$ = Raumsensortemperatur = Temperatur des raumseitigen Sensors (für Heizkostenverteiler ohne raumseitigen Sensor ist $t_{RS} = t_L$), S = Sensor und n = 1 oder n = 2, d. h. Einfühler oder Zweifühler ist.

Für Zweifühler-Einheiten gilt:

$$\Delta t_{S2} = t_{HS} - t_{RS} \qquad (2),$$

wobei $t_{HS}$ = Heizkörpersensortemperatur und
$t_{RS}$ = Raumsensortemperatur ist.

Für Einfühler-Einheiten gilt:

$$\Delta t_{S1} = t_{HS} - t_L \qquad (3),$$

wobei $t_{HS}$ = Heizkörpersensortemperatur und
$t_L$ = Raumtemperatur/Raumlufttemperatur, konstanter Wert.

Der c-Wert ist somit definiert mit den Sensortemperaturen des Heizkostenverteilers in Verbindung mit einer bestimmten Montageplatte auf einem bestimmten Heizkörper verknüpft. Aus geräte- und heizkörperspezifischen c-Werten können daher entsprechende Sensortemperaturen ermittelt werden.

Mit der erfindungsgemäßen Anordnung und dem erfindungsgemäßen Verfahren kann eine Verwendung von Heizkostenverteilern unterschiedlicher Bauart bzw. Fabrikate bei identischer thermischer Ankopplung der Montageplatten an die Heizkörper in einer Abrechnungseinheit mit vereinfachter Parametrierung von Ersatz- oder Zusatzgeräten als Heizkostenverteiler ermöglicht werden.

Der so genannte c-Wert ist ein Ausdruck für einen Grad der thermischen Ankopplung von Temperatursensoren der Heizkostenverteiler, insbesondere der Messelektronik, an zu erfassende Temperaturen. Zum Beispiel wird der c-Wert für jeweilige Kombinationen aus Heizkostenverteiler und Heizkörper nach der Norm DIN EN 834/835 ermittelt. Unterschiedliche thermische Ankopplungen haben zur Folge, dass beispielsweise an Heizkörpern verschiedener Bauart bei gleicher Normwärmeleistung und gleichen Betriebsbedingungen unterschiedliche Anzeigewerte trotz gleicher Wärmeabgabe erreicht werden. Hierfür müssen die Verbrauchswerterfassungseinheiten normgerecht parametriert werden, damit gleiche Verbrauchswerte bereitstellbar sind. Ein Mischverbau mit oder Austausch von bereits vorhandenen Verbrauchswerterfassungseinheiten durch neue ist im allgemeinen nicht möglich, da das Zählverhalten der Heizkostenverteiler neben der thermischen Kopplung auch maßgeblich vom verwendeten Messalgorithmus beeinflusst wird. Mittels der Montageplatte mit identischer oder zumindest gleicher thermischer Ankopplung an die Heizkörper kann die Parametrierung im Wesentlichen vereinfacht werden. Primäre Einflussgröße des abgeleiteten c-Wertes ist die identische oder zumindest gleiche thermische Ankopplung der Montageplatte an die Heizkörper. Die Ausbildung und Anordnung der Montageplatte hat einen maßgeblichen Einfluss auf die Messergebnisse. Wenn ein Ersatz- oder Zusatzgerät als Heizkostenverteiler auf die Montageplatte, mit zumindest identischer Struktur der dem Heizkörper zugewandten Seite, montiert wird, können Parameter oder Kenngrößen für die Parametrierung in Abhängigkeit von der thermischen Ankopplung der Montageplatte an den oder die Heizkörper beschreibenden Parameter bzw. Kenngrößen, wie dem c-Wert, abgeleitet werden. Insbesondere werden c-Werte der vorangegangenen oder anderen thermischen Kopplungsanordnung als Grundlage für abgeleitete c-Werte für das Ersatz- oder Zusatzgerät herangezogen. Beispielsweise erfolgt die Ermittlung des abgeleiteten c-Wertes oder der abgeleiteten c-Werte für das Ersatz- oder Zusatzgerät über den funktionellen Zusammenhang, zum Beispiel eine Gerade oder ein Polynom höherer Ordnung, mit den c-Werten des vorangegangenen oder anderen Heizkostenverteilers auf einer Montageplatte mit identischer oder zumindest gleicher thermischer Kopplung zum jeweiligen Heizkörper, ermittelt auf einer repräsentativen Anzahl verschiedener Heizkörper. Die ermittelten Daten können auf eine Gesamtheit der Heizkörper mit identisch oder zumindest gleich thermisch angekoppelten Montageplatten für diesen Heizkostenverteiler einer Abrechnungseinheit, mehrerer Abrechnungseinheiten und/oder einer Liegenschaft/Nutzeinheit angewendet werden.

Beispielsweise korrelieren die c-Werte von identischen oder zumindest gleichen Heizkostenverteilern (mit jeweils gleicher Messelektronik und/oder gleicher Bauform, -größe und/oder Abmessungen) auf unterschiedlichen Montageplatten auf einer repräsentativen Auswahl von Heizkörpern nicht miteinander. Überraschenderweise aber physikalisch nachvollziehbar ist, dass die c-Werte von unterschiedlichen Heizkostenverteilern bei Anwendung auf Montageplatten mit identischer oder zumindest gleicher thermischer Ankopplung an diversen Heizkörpern miteinander korrelieren. So können bereits vorhandene c-Werte für vorhandene thermische Kopplungsanordnungen (Heizkörper-Montageplatte-Heizkostenverteiler-Anordnungen) als abgeleitete c-Werte für neue thermische Kopplungsanordnungen mit identischer oder zumindest gleicher thermischer Ankopplung von Montageplatte und jeweiligem Heizkörper verwendet werden. Hierdurch kann der neue Heizkostenverteiler entsprechend parametriert oder kalibriert werden.

Somit können in einer Liegenschaft bzw. innerhalb einer Abrechnungseinheit mit unterschiedlichen Heizkostenverteilern oder Ablesegeräten und identischen oder zumindest gleichen Montageplatten bzw. mit Montageplatten mit identischer oder zumindest gleicher Struktur der dem Heizkörper zugewandten Seite c-Werte alter thermischer Kopplungsanordnungen und/oder vorhandener thermischer Kopplungsanordnungen beispielsweise zur Korrektur von Messwerten für richtig ermittelbare Verbrauchswerte herangezogen werden. Somit kann eine Parametrierung oder Kalibrierung neuer Heizkostenverteiler erfolgen, indem zumindest die geräte- und/oder heizkörperspezifischen c-Werte von vorhandenen thermischen Kopplungsanordnungen zur Berechnung der c-Werte der neuen thermischen Kopplungsanordnungen verwendet werden.

In einer Weiterbildung kann die Montageplatte ein Adapterteil umfassen, welches derart konfiguriert ist, dass die Montageplatte einer neuen Verbrauchswerterfassungseinheit oder eines neuen Heizkostenverteilers an einen vorhandenen Heizkörper koppelbar ist, wobei die Montageplatte insbesondere mit identischer oder zumindest gleicher thermischer Ankopplung an den vorhandenen Heizkörper anordenbar ist.

Beispielsweise umfasst die Montageplatte vorgegebene Abmessungen, Konturen, Oberflächenrauheiten, wärmeleitende Strukturen und/oder wärmeleitende Materialien zur Charakterisierung der heizkörperzugewandten Seite. Beispielsweise ist eine dem Heizkörper zugewandte Seite im Wesentlichen flächig oder großflächig, insbesondere eben und mit wärmeleitenden Oberflächenschichten, ausgebildet.

Zur Montage des Heizkostenverteilers an der Montageplatte umfasst diese auf einer dem Heizkörper abgewandten Seite Befestigungselemente, insbesondere in Form von Befestigungsschienen und/oder Befestigungshaken/-armen/-klipsen/-rasten.

Für einen Wärmetransport oder -austausch vom Heizkörper zum Heizkostenverteiler sind drei Wärmetransportmechanismen von Bedeutung: Wärmeleitung, Konvektion und Strahlung. Je nach Übereinstimmung von Oberflächenprofilen des Heizkörpers und der Montageplatte verschieben sich Anteile der Wärmetransportmechanismen beim Wärmeaustausch zwischen Heizkörper und Montageplatte. Das heißt, je ähnlicher die zueinander zugewandten Oberflächenprofile bzw. Konturen des Heizkörpers und der Montageplatte sind, desto besser kann der Wärmetransport bzw. die Wärmeleitung erfolgen.

Des Weiteren ist eine Anordnung zur Verbrauchswerterfassung vorgesehen, welche zumindest einen Heizkostenverteiler umfasst, der mit unterschiedlichen und/oder bereits vorhandenen Montageplatten kompatibel ist, die identisch oder zumindest gleich thermisch mit dem Heizkörper gekoppelt sind. Unter zumindest gleicher thermischer Kopplung wird beispielsweise eine thermische Kopplung mit Toleranzbereichen von +/-2% für Bauteiltoleranzen, insbesondere Maß- und Zusammensetzungs-/Montage-Toleranzen des Materials, verstanden. Dabei ist der Heizkostenverteiler derart konfiguriert, dass dieser in Abhängigkeit der identischen oder zumindest gleichen thermischen Ankopplung der Montageplatte mit unterschiedlichen Heizkörpern parametrierbar ist. Hierzu ist der Heizkostenverteiler messtechnisch kompatibel und parametrierbar ausgebildet. Insbesondere umfasst der Heizkostenverteiler eine elektronische Erfassungsvorrichtung und eine Speichereinheit.

In einer Ausführungsform der Anordnung ist der Heizkostenverteiler mit zu im Feld vorhandenen Montageplatten mechanisch koppelbar. Insbesondere ist der Heizkostenverteiler zum Mischverbau mit bereits vorhandenen Montageplatten und zum Ersatz von bereits vorhandenen Heizkostenverteilern ausgebildet. Dabei bleiben bereits vorhandene Schweißbolzen und Montageplatten an einer bestehenden Position erhalten. Des Weiteren kann der Heizkostenverteiler mit Algorithmen, kompatibel zu den Algorithmen der bereits verbauten Heizkostenverteiler, arbeiten. Bleibt die alte Montageplatte erhalten, wird der alte Heizkostenverteiler demontiert, der neue Heizkostenverteiler montiert und der oder die c-Werte der alten Heizkörper-Montageplatte-Heizkostenverteiler-Anordnung werden zur Ermittlung abgeleiteter c-Werte für die neue Heizkörper-Montageplatte-Heizkostenverteiler-Anordnung herangezogen Beispielsweise erfolgt die Ableitung bzw. Umrechnung mittels des funktionalen Zusammenhangs für die c-Werte von den alten Heizkörper-Montageplatte-Heizkostenverteiler-Anordnungen (= alte thermische Kopplungsanordnungen) und den neuen Heizkörper-Montageplatte-Heizkostenverteiler-Anordnungen (= neue thermische Kopplungsanordnungen).

Weiterhin ist eine Verbrauchswerterfassungseinheit vorgesehen, die eine Montageplatte und eine Heizkostenverteiler umfasst, die gemeinsam oder einzeln mischverbaut werden können. Insbesondere ist der messtechnisch kompatible, parametrierbare elektronische Heizkostenverteiler für einen Mischverbau mit oder zum Ersatz von bereits vorhandenen Heizkostenverteilern vorgesehen.

Gemäß einer möglichen Weiterbildung ist die Montageplatte, mit identischer oder zumindest gleicher Struktur der dem Heizkörper zugewandten Seite, für einen Mischverbau mit oder zum Ersatz von bereits vorhandenen Montageplatten konfiguriert. Der oder die Heizkostenverteiler ist bzw. sind für einen Mischverbau mit oder zum Ersatz von bereits vorhandenen Heizkostenverteilern konfiguriert. Darüber hinaus können die Montageplatte und die Heizkostenverteiler miteinander gekoppelt sein und für einen Mischverbau mit oder zum vollständigen Ersatz von bereits vorhandenen Heizkostenverteilern innerhalb einer Liegenschaft und/oder einer Abrechnungseinheit konfiguriert sein. Dabei können sowohl die Montageplatte als auch die Heizkostenverteiler zur identischen oder zumindest gleichen thermischen Ankopplung mit unterschiedlichen Heizkörpern ausgebildet sein.

Der ermittelte funktionale Zusammenhang der c-Werte verschiedener thermischer Kopplungsanordnungen (Heizkörper-Montageplatte-Heizkostenverteiler-Anordnungen) für Montageplatten mit zumindest gleicher oder identischer thermischer Ankopplung an eine repräsentative Auswahl verschiedener Heizkörper wurde anhand einer Korrelationsanalyse ermittelt. Beispielsweise wird eine Korrelationsanalyse durchgeführt für verschiedene Heizkostenverteiler montiert auf identischen oder zumindest gleichen, insbesondere baugleichen, Montageplatten mit identischer oder zumindest gleicher thermischer Ankopplung an eine repräsentative Auswahl verschiedener Heizkörper. Beispielsweise ist der funktionale Zusammenhang in einer Geradengleichung darstellbar und als Basis zur Ableitung von c-Werten vorhandener thermischer Kopplungsanordnungen (vorhandene Heizkörper-Montageplatte-Heizkostenverteiler-Anordnungen) auf neue thermische Kopplungsanordnungen (neue Heizkörper-Montageplatte-Heizkostenverteiler-Anordnungen) anwendbar.

Die Korrelationsanalyse der jeweiligen c-Werte der unterschiedlichen thermischen Kopplungsanordnungen, das heißt c-Werte einer ersten thermischen Kopplungsanordnung auf einer identischen oder zumindest heizkörperseitig identischen oder zumindest gleichen Montageplatte im Vergleich mit c-Werten einer zweiten thermischen Kopplungsanordnung auf der identischen oder zumindest heizkörperseitig identischen oder zumindest gleichen Montageplatte auf einer repräsentativen Anzahl verschiedener Heizkörper zeigt, dass für unterschiedliche Heizkostenverteiler ein eindeutiger funktionaler Zusammenhang der c-Werte ermittelt werden kann. Um diesen funktionalen Zusammenhang für die c-Werte der ersten thermischen Kopplungsanordnungen und der zweiten thermischen Kopplungsanordnungen zu ermitteln, genügen im Allgemeinen bereits ein Dutzend c-Wert-Ermittlungen an möglichst verschiedenen Heizkörpern. Zum Beispiel können ermittelte c-Werte von verschiedenen thermischen Kopplungsanordnungen an verschiedenen Heizkörpern mit identischen oder zumindest heizkörperseitig identischen oder zumindest gleichen, insbesondere baugleichen Montageplatten mit jeweils identischer oder zumindest gleicher thermischer Ankopplung zwischen der Montageplatte und den jeweils verschiedenen Heizkörpern in einer Datenbank hinterlegt werden. Wenn für eine zu ersetzende thermische Kopplungsanordnung bereits eine Datenbank mit c-Werten für eine Mehrzahl von Heizkörpern existiert und der oben genannte funktionale Zusammenhang der c-Werte zur neuen thermischen Kopplungsanordnung ermittelt wurde und bekannt ist, sind keine weiteren Ermittlungen bzw. Messungen notwendig. Somit kann ein messtechnisch kompatibler, parametrierbarer Heizkostenverteiler auf der Basis der in der Datenbank hinterlegten c-Werten der zu ersetzenden Anordnung des jeweiligen Heizkörpers parametriert werden.

Für eine Ableitung der c-Werte von einer ersten thermischen Kopplungsanordnung auf eine neue thermische Kopplungsanordnung wird beispielsweise folgendes definiert:

$$c_{ny} = A_n * c_{nx} + B_n \qquad (4)$$

$$c_n = 1 - \frac{\Delta t_{Sn}}{\Delta t} \qquad (5),$$

wobei A der Anstieg und B der Offset des beispielsweise linearen Zusammenhangs zwischen den c-Werten der ersten, vorhandenen oder alten thermischen Kopplungsanordnung (x) und einer zweiten, neuen oder geänderten thermischen Kopplungsanordnung (y) ist, x = Kennzeichnung einer (vorhandenen oder alten) Basisanordnung (erste vorhandene oder alte Montageplatte plus vorhandener oder alter Heizkostenverteiler auf diversen Heizkörpern), y = Kennzeichnung einer neuen thermischen Kopplungsanordnung auf denselben Heizkörpern, für die neue c-Werte abgeleitet werden sollen, $\Delta t_s$ kennzeichnet die gemessene Temperaturdifferenz der Temperatursensoren des Heizkostenverteilers und n = 1 oder 2, kennzeichnet Einfühler oder Zweifühler, $\Delta t$ steht für die Solltemperaturdifferenz zwischen der mittleren Heizkörper- und der Raumtemperatur.

Durch Umstellen der Gleichung (5) erhält man

$$\Delta t_{Sn} = (1 - c_n) * \Delta t \qquad (6).$$

Durch Bildung eines Quotienten der $\Delta t_{Sn}$ des ersten, alten oder vorhandenen Gerätes x auf das neue oder geänderte Gerät y erhält man:

$$\frac{\Delta t_{Snx}}{\Delta t_{Sny}} = \frac{(1 - c_{nx})}{(1 - c_{ny})} \qquad (7).$$

Damit das neue oder geänderte Gerät (= Anordnung aus neuem Heizkostenverteiler und Montageplatte) einen identischen Verbrauchswert im Vergleich zum zu ersetzenden, alten Gerät (= Anordnung aus altem Heizkostenverteiler und Montageplatte) ermitteln kann, müssen die vom Neugerät gemessenen Temperaturdifferenzen in die Werte des zu ersetzenden, alten Gerätes umgerechnet werden. Durch Umstellen der Gleichung (7) und Einsetzen von Gleichung (4) erhält man:

$$\Delta t_{Snx} = \frac{(1-c_{nx})}{(1-A_n c_{nx}-B_n)} * \Delta t_{Sny} \qquad (8),$$

eine Definition zur Ermittlung oder Berechnung einer virtuellen Temperaturdifferenz des vorhandenen oder alten Gerätes (Anordnung aus altem Heizkostenverteiler und Montageplatte) als Funktion der Temperaturmesswerte des Ersatz- oder Zusatzgerätes des messtechnisch kompatiblen, parametrierbaren Heizkostenverteilers in Abhängigkeit einer ermittelten, d. h. gemessenen Temperaturdifferenz des Ersatzgerätes (Anordnung aus neuem Heizkostenverteiler und Montageplatte) als Funktionen des c-Wertes des vorhandenen oder alten Gerätes auf dem Ziel-Heizkörper. Da der Verbrauchswert eines Heizkostenverteilers als Intergral der bewerteten Temperaturdifferenz gebildet wird, ist somit eine wesentliche Voraussetzung für die Berechnung eines identischen Verbrauchswertes durch das Ersatzgerät gewährleistet.

Es ist nicht zwingend notwendig, identische oder gleiche Montageplatten für das Ersatz- oder Zusatzgerät und damit den messtechnisch kompatiblen, parametrierbaren Heizkostenverteiler zu verwenden. Es genügt, wenn die Montageplatten jeweils eine identische oder zumindest gleiche thermische Ankopplung zu den Heizkörpern aufweisen. Dies ist im Allgemeinen schon erfüllt, wenn die Montageplatten auf der dem Heizkörper zugewandten Seite zum Beispiel ein identisches oder gleiches Profil, insbesondere Oberflächenprofil, aufweisen und aus dem gleichen Material bzw. Materialzusammensetzung gefertigt sind.

Ausführungsbeispiele der Erfindung werden im Folgenden anhand von Zeichnungen näher erläutert. Darin zeigen:

Figur 1A    zeigt eine schematische Darstellung eines Ausführungsbeispiels einer Anordnung zur Verbrauchswerterfassung in einer Abrechnungseinheit eines Gebäudes oder einer Liegenschaft.

Figur 1B    schematisch eine perspektivische Darstellung eines Ausführungsbeispiels einer Verbrauchswerterfassungseinheit, kompakter Heizkostenverteiler, welche an einem Heizkörper angeordnet ist,

Figur 1C    schematisch in einer Tabelle verschiedenartige thermische Kopplungsanordnungen einer Liegenschaft mit den verschiedenen Kombinationsmöglichkeiten ihrer Komponenten,

Figur 2    schematisch eine perspektivische Darstellung eines Ausführungsbeispiels einer Montageplatte der Verbrauchswerterfassungseinheit, insbesondere eines Heizkostenverteilers,

Figur 3    schematisch eine perspektivische Explosionsdarstellung eines Ausführungsbeispiels der Montageplatte, welche mit einem Heizkörper koppelbar ist,

Figur 4    schematisch eine Schnittdarstellung eines Ausführungsbeispiels einer Montageplatte,

Figur 5A    schematisch eine Schnittdarstellung eines Ausführungsbeispiels der Montageplatte, welche an einem rippenförmigen Heizkörper angeordnet ist,

Figur 5B    schematisch eine Schnittdarstellung eines Ausführungsbeispiels der Montageplatte, welche an einem plattenförmigen Heizkörper angeordnet ist,

Figur 6    schematisch eine perspektivische Darstellung eines Ausführungsbeispiels einer als Heizkostenverteiler ausgebildeten Verbrauchswerterfassungseinheit,

Figur 7A    schematisch den Austausch eines vorhandenen Heizkostenverteilers gegen einen neuen Heizkostenverteiler, und

Figur 7B    schematisch ein Ausführungsbeispiel einer Korrelationsanalyse zur Ermittlung eines funktionalen Zusammenhangs von c-Werten unterschiedlicher thermischer Kopplungsanordnungen mit einer identischen Montageplatte und zwei verschiedenen Heizkostenverteilern auf diversen unterschiedlichen Heizkörpern.

Einander entsprechende Teile sind in allen Figuren mit den gleichen Bezugszeichen versehen.

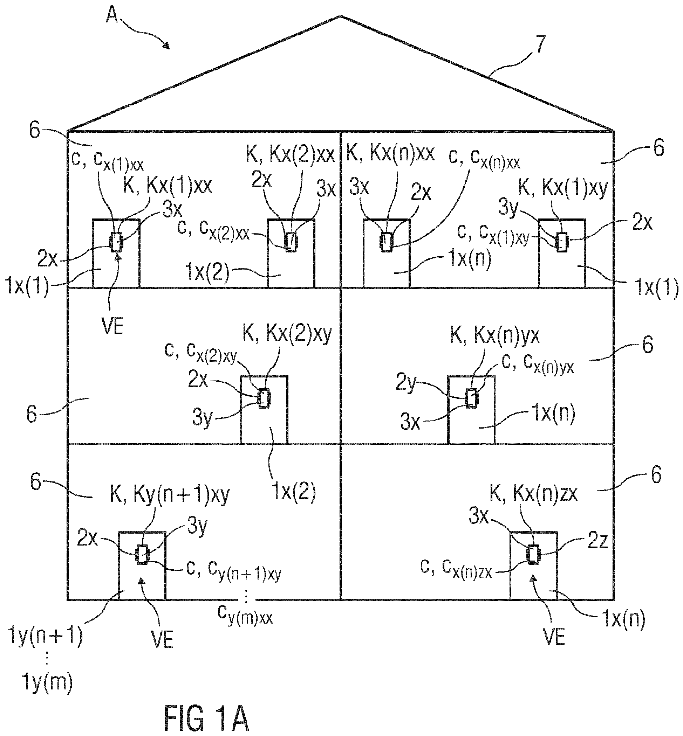

**Figur 1A** zeigt eine schematische Darstellung eines Ausführungsbeispiels einer Anordnung A zur Verbrauchswerterfassung in mindestens einer Abrechnungseinheit 6 eines Gebäudes 7 oder einer Liegenschaft. Die Anordnung A umfasst eine Mehrzahl von Heizkörpern 1x(1) bis 1x(n), (= vorhandene oder alte Heizkörper) und/oder 1y(n+1) bis 1y(m), (= neue Heizkörper), in im Allgemeinen verschiedenen Ausführungen, an denen jeweils eine Montageplatte 2x (= vorhandene oder alte Montageplatte) und/oder 2y (= neue Montageplatte) und/oder 2z (= neue, zumindest heizkörperseitig identisch zur alten Montageplatte 2x ausgebildete Montageplatte) und an diesen wiederum jeweils ein Heizkostenverteiler 3x (= vorhandener oder alter Heizkostenverteiler) und/oder 3y (= neuer Heizkostenverteiler) montiert sind. Der an einer Montageplatte 2x, 2y montierte Heizkostenverteiler 3x, 3y und die Montageplatte 2x, 2y, 2z bilden eine Verbrauchswerterfassungseinheit VE.

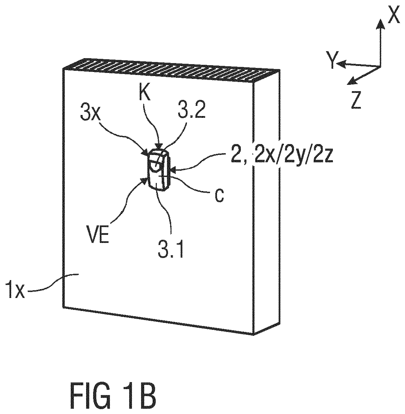

Insbesondere zeigt **Figur 1B** schematisch eine Verbrauchswerterfassungseinheit VE, welche an einem vorhandenen oder alten, insbesondere plattenförmigen, Heizkörper 1x angeordnet ist.

Zur Vereinfachung der folgenden Beschreibung ist in den dargestellten Figuren 1A bis 7B jeweils ein Koordinatensystem aufgezeigt, wobei eine X-Achse einer Längsausdehnung X der Verbrauchswerterfassungseinheit VE, eine Y-Achse einer Querausdehnung Y der Verbrauchswerterfassungseinheit VE und eine Z-Achse einer Hochausdehnung Z der Verbrauchswerterfassungseinheit VE entspricht.

Zum Beispiel ist der Heizkörper 1x gemäß Figur 1B ein vorhandener oder alter Plattenheizkörper mit beispielsweise waagrechter und/oder senkrechter Wasserführung. Alternativ kann der Heizkörper 1x ein Gliederheizkörper (Radiator), ein Röhrenradiator, ein Rohrregister-Heizkörper, ein Konvektor, ein Badheizkörper u.s.w. sein.

Die Verbrauchswerterfassungseinheit VE umfasst den Heizkostenverteiler 3x, insbesondere einen elektronischen Heizkostenverteiler 3x. Zum Beispiel ist der Heizkostenverteiler 3x ein elektronisches Gerät zur Heizkostenverteilung durch Erfassen anteiliger Wärmeabgaben von Heizkörpern 1x. Insbesondere ist der Heizkostenverteiler 3x eine messtechnisch kompatible, parametrierbare Verbrauchswerterfassungseinheit VE.

Die Verbrauchswerterfassungseinheit VE umfasst die vorhandene oder alte Montageplatte 2x, welche als Rückenteil oder Wärmeleiter des vorhandenen oder alten Heizkostenverteilers 3x ausgebildet ist. Insbesondere ist die Montageplatte 2x thermisch mit dem Heizkörper 1x gekoppelt, insbesondere wärmeleitend an dem Heizkörper 1x angeordnet.

Der Heizkostenverteiler 3x ist insbesondere als Vorderteil der Verbrauchswerterfassungseinheit VE ausgebildet und an der Montageplatte 2x montiert und thermisch mit dieser gekoppelt. Dabei wird der vorhandene oder alte Heizkostenverteiler 3x auf die vorhandene oder alte Montageplatte 2x gesteckt und beispielsweise verplombt. Der Heizkostenverteiler 3x umfasst des Weiteren beispielsweise ein Gehäuse 3.1 und eine in dem Gehäuse 3.1 angeordnete, nicht näher dargestellte Messelektronik, deren ermittelte Werte, wie Verbrauchswerte, Temperaturwerte und/oder andere Daten, auf einer Anzeigeeinheit 3.2 ausgebbar sind.

Der jeweilige Heizkörper 1x und die an diesem montierte Montageplatte 2x sowie der an dieser Montageplatte 2x auf der vom Heizkörper 1x abgewandten Seite der Montageplatte 2x montierte Heizkostenverteiler 3x bilden zusammen jeweils eine thermische Kopplungsanordnung K. Zur Beschreibung der thermischen Kopplung dieser Bauteile miteinander ist im jeweiligen Heizkostenverteiler 3x zumindest ein c-Wert c hinterlegt. Dieser c-Wert c wird bei der Ermittlung der Verbrauchswerte benötigt. Beispielsweise können bei einem 2-Fühlergerät auch zwei c-Werte c hinterlegt sein.

In einer Liegenschaft, wie dem Gebäude 7 gemäß Figur 1A, kann es dabei notwendig sein, vorhandene oder alte Heizkostenverteiler 3x gegen neue Heizkostenverteiler 3y auszutauschen oder den vorhandenen oder alten Heizkostenteiler 3x zu ersetzen, wobei der vorhandene oder alte Heizkörper 1x und die vorhandene oder alte Montageplatte 2x nicht ersetzt oder ausgetauscht werden. Auch kann es notwendig sein, neue Heizkörper 1y mit neuen Montageplatten 2y oder vorhandenen Montageplatten 2x oder neuen Montageplatten 2z, die heizkörperseitig identisch zu den vorhandenen Montageplatten 2x sind, zu versehen, auf welchen wiederum neue, beispielsweise baugleiche oder bauungleiche Heizkostenverteiler 3y oder vorhandene Heizkostenverteiler 3x montiert werden bzw. sind.

**Figur 1A** zeigt beispielhaft als eine Liegenschaft das Gebäude 7 mit mehreren Wohnungen als Abrechnungseinheiten 6, welche wiederum mehrere Heizkörper 1x(1) bis 1x(n) oder 1y(n+1) umfassen, an denen über die Montageplatte 2x, 2y, 2z Heizkostenverteiler 3x, 3y zur Erfassung des Verbrauchs der Heizkörper 1x(1) bis 1x(n), 1y(n+1) angeordnet sind.

Dabei umfasst die Anordnung A mehrere, verschiedenartige thermische Kopplungsanordnungen K, die aus verschiedenen Kombinationen von alten und/oder neuen Komponenten, wie alten Heizkörpern 1x(1) bis 1x(n) oder neuen Heizkörpern 1y(n+1), alten Montageplatten 2x, neuen Montageplatten 2y oder neuen ähnlichen Montageplatten 2z (zum Beispiel neue Montageplatten, die heizkörperseitig identisch zur alten Montageplatte 2x ausgebildet sind) und alten Heizkostenverteilern 3x oder neuen Heizkostenverteilern 3y, wobei die neuen Heizkostenverteiler 3x verschieden von den alten Heizkostenverteilern 3y sind.

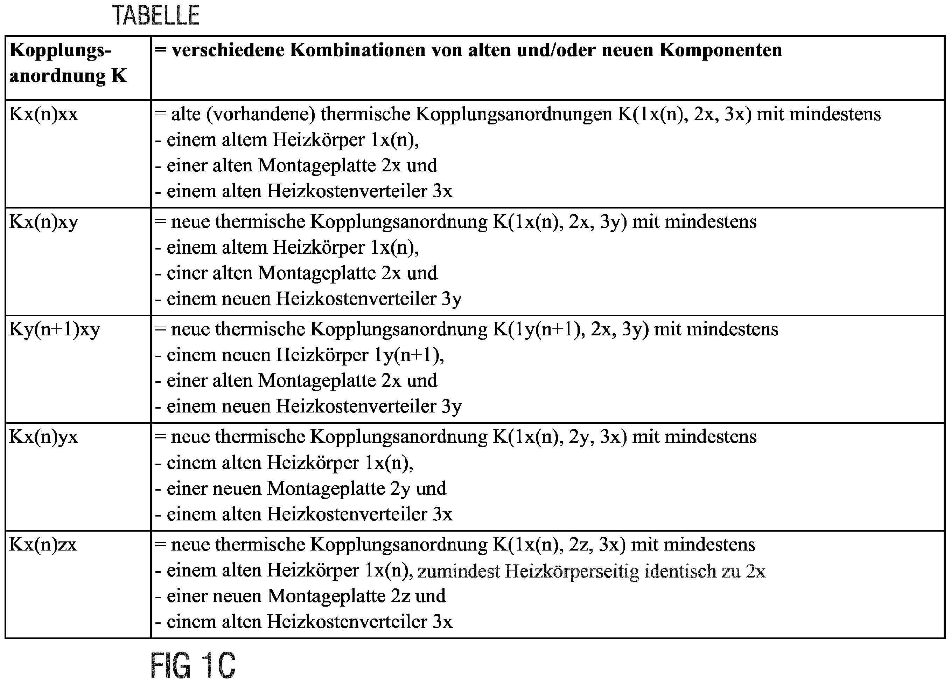

**Figur 1C** zeigt eine Tabelle mit verschiedenen Kombinationen von Komponenten für die in Figur 1A gezeigten verschiedenartigen thermischen Kopplungsanordnungen K, zum Beispiel Kx(1)xx bis Kx(n)xx, Kx(1)xy bis Kx(n)xy, Ky(n+1)xy, Kx(n)yx und Kx(n)zx.

Die verschiedenartigen thermischen Kopplungsanordnungen K unterscheiden sich durch Kombinationen von verschiedenartigen, miteinander montierten Komponenten. Insbesondere sind die verschiedenartigen thermischen Kopplungsanordnungen K aus verschiedenen Kombinationen von vorhandenen/alten Komponenten und neuen Komponenten gebildet, wie dies nachfolgend an Beispielen beschrieben wird:

So umfasst beispielsweise die jeweilige thermische Kopplungsanordnung Kx(1)xx bis Kx(n)xx einen vorhandenen/alten Heizkörper 1x mit einer vorhandenen/alten Montageplatte 2x und einem vorhandenen/alten Heizkostenverteiler 3x. In dem jeweils vorhandenen Heizkostenverteiler 3x ist als c-Wert c der vorhandene/alte c-Wert $c_{x(1)xx}$ bis $c_{x(n)xx}$ hinterlegt, der die thermische Ankopplung zwischen diesen vorhandenen/alten Komponenten - dem Heizkostenverteiler 3x, der Montageplatte 2x und dem Heizkörper 1x - beschreibt. Die alten c-Wert $c_{x(1)xx}$ bis $c_{x(n)xx}$ wurden dabei üblicherweise in einem Labor für eine Vielzahl von alten Heizkörpern 1x(1) bis 1x(n) ermittelt und beispielsweise in einer Datenbank gespeichert. Die ermittelten alten c-Werte $c_{x(1)xx}$ bis $c_{x(n)xx}$ werden dann in einer Datenbank hinterlegt. Bei der Inbetriebnahme des Heizkostenverteilers 3x werden die entsprechenden Werte aus der Datenbank in einem Speicher des Heizkostenverteilers 3x hinterlegt.

Werden in der Liegenschaft neue Heizkörper 1y(n+1) bis 1y(m) installiert, so werden auch für diesen neuen Heizkörper 1y(n+1) bis 1y(m), auf welchen beispielsweise die alte Montageplatte 2x und der alte Heizkostenverteiler 3x installiert werden, zugehörige neue c-Werte $c_{y(n+1)xx}$ bis $c_{y(m)xx}$ für eine Vielzahl von neuen Heizkörpern 1y(n+1) bis 1y(m) bestimmt und in einer Datenbank in den alten Heizkostenverteilern 3x hinterlegt. Dabei gibt es keinen funktionalen Zusammenhang zwischen den alten c-Werten $c_{x(1)xx}$ bis $c_{x(n)xx}$ für die alten Heizkörper 1x(1) bis 1x(n) und den neuen c-Werten $c_{y(n+1)xx}$ bis $c_{y(m)xx}$ für die neuen Heizkörper 1y(n+1) bis 1y(m). Die neuen c-Werte $c_{y(n+1)xx}$ bis $c_{y(m)xx}$ für die neuen Heizkörper 1y(n+1) bis 1y(m) werden dabei in analoger Weise, wie die alten c-Werte $c_{x(1)xx}$ bis $c_{x(n)xx}$ für die alten Heizkörper 1x(1) bis 1x(n), in einem Labor für eine Vielzahl von neuen Heizkörpern 1y(n+1) bis 1y(m) ermittelt und beispielsweise in einer Datenbank gespeichert. Die ermittelten neuen c-Werte $c_{y(n+1)xx}$ bis $c_{y(m)xx}$ werden dann in der Datenbank hinterlegt.

Zur Vermeidung der aufwendigen Bestimmung der c-Werte c bei Austausch oder Ersatz von vorhandenen Komponenten, wie vorhandener Montageplatte 2 und/oder vorhandenem Heizkostenverteiler 3, auf alten Heizkörper 1x von vorhandenen thermischen Kopplungsanordnungen Kx(n)xx durch neue Komponenten, wie neuer Montageplatte 2y und/oder 2z und/oder neuem Heizkostenverteiler 3y in einer entsprechend neuen thermischen Kopplungsanordnung Kxxy oder Kxyx oder Kxyy oder Kxzy, sieht die Erfindung die Anwendung eines funktionalen Zusammenhangs der neuen c-Werten $c_{xxy}$, $c_{xyx}$, $c_{xyy}$, $c_{xzy}$ und der alten c-Werte $c_{xxx}$ vor gemäß folgender Gleichungen:

$$c_{xxy} = f(c_{xxx}) \qquad\qquad [9]$$

$$c_{xyx} = g(c_{xxx}) \qquad\qquad [10]$$

$$c_{xyy} = h(c_{xxx}) \qquad\qquad [11]$$

$$c_{xzy} = i(c_{xxx}) \qquad\qquad [12]$$

Dabei ist es ausreichend, dass der jeweilige funktionale Zusammenhang f, g, h oder i für die entsprechend neuen thermischen Kopplungsanordnungen Kxxy, Kxyx, Kxyy bzw. Kxzy einmalig für eine vorgegebene Anzahl von, beispielsweise 15 oder 20, alten Heizkörper 1x(n), bestimmt wird. Bevorzugt werden jene alten Heizkörper 1x(n) ausgewählt, welche eine mögliche Bandbreite der c-Werte c für die alten Heizkörper 1x(n) abdecken und repräsentieren.

Für nachfolgend, neu zu installierende oder installierte thermische Kopplungsanordnungen Kyxy, Kyyx, Kyyy bzw. Kyzy mit neuem Heizkörper 1y, alten oder neuen Montageplatten 2x, 2y, 2z oder altem oder neuen Heizkostenverteiler 3x, 3y kann dann der jeweilige neue c-Wert $c_{yxy}$, $c_{yyx}$, $c_{yyy}$, $c_{yzy}$ anhand des jeweils zugehörigen einmalig ermittelten funktionalen Zusammenhangs f, g, h oder i gemäß der jeweils zugehörigen Gleichung 9, 10, 11 bzw. 12 auf der Basis einer Messung $c_{yxx}$ abgeleitet werden.

Zur Vermeidung der aufwendigen Bestimmung der c-Werte c bei Austausch oder Ersatz von Komponenten von vorhandenen thermischen Kopplungsanordnungen Kx(n)xx durch neue Komponenten auf neuen Heizkörpern 1y(n+1) in einer neuen thermischen Kopplungsanordnung Kyxy oder Kyyx, Kyyy oder Kyzy sieht die Erfindung die Anwendung des funktionalen Zusammenhangs der neuen c-Werten $c_{yxy}$, $c_{yyx}$, $c_{yyy}$, $c_{yzy}$ und der alten c-Werte $c_{xxx}$ vor gemäß folgender Gleichungen:

$$c_{yxy} = f(c_{yxx}) \qquad\qquad [13]$$

$$c_{yyx} = g(c_{yxx}) \qquad\qquad [14]$$

$$c_{yyy} = h(c_{yxx}) \qquad\qquad [15]$$

$$c_{yzy} = i(c_{yxx}) \qquad\qquad [16]$$

Da für die neuen Heizkörper 1y(n+1) bis 1y(m) die zugehörigen neuen c-Werte $c_{y(n+1)xx}$ bis $c_{y(m)xx}$ im Labor bestimmt worden sind, sind keine weiteren Messungen erforderlich. Werden nun auf diesen neuen Heizkörpern 1y(n+1) bis 1y(m) neue Komponenten, wie neue Montageplatten 2y und/oder neue Heizkostenverteiler 3y installiert, so kann der neue c-Wert $c_{yxy}$, $c_{yyx}$, $c_{yyy}$ oder $c_{yzy}$ aus dem alten c-Wert $c_{yxx}$ gemäß der zugehörigen Gleichung [13] bis [16] abgeleitet werden.

Im Ausführungsbeispiel nach Figur 1A sind beispielsweise als neue thermische Kopplungsanordnungen K die thermischen Kopplungsanordnungen Kx(1)xy, Kx(2)xy in der Liegenschaft montiert, die jeweils einen vorhandenen/alten Heizkörper 1x umfassen, auf welchem eine alte Montageplatte 2x montiert ist und an welcher wiederum ein neuer Heizkostenverteiler 3y montiert ist, welcher insbesondere nicht bau- und/oder nicht typgleich zum alten oder vorhandenen Heizkostenverteiler 3x ist. In dem neuen und insbesondere nicht bau- oder typgleichen Heizkostenverteiler 3y ist als c-Wert c ein neuer, abgeleiteter c-Wert $c_{x(1)xy}$ oder $c_{x(2)xy}$ hinterlegt, der vom vorhandenen oder alten c-Wert $c_{x(1)xx}$ bzw. $c_{x(2)xx}$ einer der alten gleichen thermischen Kopplungsanordnungen Kx(1)xx bzw. Kx(2)xx abgeleitet ist. Beispielsweise sind als alte Heizkostenverteiler 3x herkömmliche funklose Heizkostenverteiler 3x oder ein als ein 1-Sensor-Gerät ausgebildeter Heizkostenverteiler 3x installiert, welche gegen neue, insbesondere mit Funkbetrieb ausgestattete bzw. als ein 2-Sensor-Gerät ausgebildete Heizkostenverteiler 3y ausgetauscht werden oder sind. In einem solchen Fall werden oder sind im jeweils neuen Heizkostenverteiler 3y als c-Werte c die neuen, abgeleiteten c-Werte $c_{x(1)xy}$ oder $c_{x(2)xy}$ hinterlegt, welche vom vorhandenen oder alten c-Wert $c_{x(1)xx}$ oder $c_{x(2)xx}$ der alten thermischen Kopplungsanordnungen Kx(1)xx bzw. Kx(2)xx abgeleitet sind. Diese neuen, abgeleiteten c-Werte $c_{x(1)xy}$ oder $c_{x(2)xy}$ werden über einen funktionalen Zusammenhang $c_{xxy} = f(c_{xxx})$ ermittelt.

Zwei weitere beispielhafte thermische Kopplungsanordnungen Kx(1)yx und Kx(2)yx umfassen jeweils die vorhandenen/alten Heizkörper 1x(1) und 1x(2), auf welchen eine neue Montageplatte 2y montiert ist, welche gleich zur alten oder vorhandenen Montageplatte 2x ausgebildet ist, und an welcher wiederum ein alter Heizkostenverteiler 3x montiert ist. In diesem Fall wird als neuer c-Wert $c_{x(1)yx}$ oder $c_{x(2)yx}$ der alte (vorhandene) c-Wert $c_{x(1)xx}$ bzw. $c_{x(2)xx}$ beibehalten und weiterverwendet. Für den Fall, dass die neue Montageplatte 2y nicht bau- oder typgleich zur alten Montageplatte 2x ausgebildet ist, so gibt es keinen funktionalen Zusammenhang und die neuen c-Wert $c_{x(1)yx}$ oder $c_{x(2)yx}$ müssen durch Messungen im Labor ermittelt werden.

Eine weitere thermische Kopplungsanordnung Ky(n+1)xy umfasst beispielhaft den neuen Heizkörper 1y(n+1), welcher baugleich oder typgleich mit dem alten Heizkörper 1x(n) ist, auf welchem eine alte Montageplatte 2x montiert ist, welche insbesondere baugleich zu den alten oder vorhandenen Montageplatte 2x in der Liegenschaft ist, und an welcher wiederum ein neuer Heizkostenverteiler 3y montiert ist, der bau- oder typgleich zu dem alten Heizkostenverteiler 2x ist. In diesem Fall wird als neuer c-Wert $c_{y(n+1)xy}$ der alte (vorhandene) c-Wert $c_{x(n)xx}$ beibehalten und weiterverwendet. Aufgrund der Baugleichheit des neuen Heizkostenverteilers 3y sind keine neuen Messungen erforderlich.

Darüber hinaus kann eine weitere thermische Kopplungsanordnung Kx(n)zx vorgesehen sein, bei welcher auf einem vorhandenen/alten Heizkörper 1x eine neue, ähnliche Montageplatte 2z montiert ist, an welcher ein alter Heizkostenverteiler 3x montiert ist. Eine neue, ähnliche Montageplatte 2z ist beispielsweise derart eingerichtet, dass deren Material und die heizkörperseitige Oberfläche und somit die Kopplungsfläche zum alten Heizkörper 1x identisch oder gleich zur heizkörperseitigen Oberfläche der alten Montageplatte 2x ausgebildet ist.

In einem solchen Fall werden oder sind im jeweils alten Heizkostenverteiler 3x als c-Werte c die neuen, abgeleiteten c-Werte $c_{x(n)zx}$ hinterlegt, welche vom vorhandenen oder alten c-Wert $c_{xxx}$ einer der alten gleichen thermischen Kopplungsanordnungen Kx(n)xx abgeleitet ist. Dieser neue, abgeleitete c-Werte $c_{x(n)zx}$ wird über den funktionalen Zusammenhang $c_{x(n)zx} = f(c_{x(n)xx})$ ermittelt.

Zur Vereinfachung der Parametrierung des neuen Heizkostenverteilers 3y sieht die Erfindung zusammenfassend vor, dass wenigstens bei einem neuen Heizkostenverteiler 3y einer zugehörigen neuen thermischen Kopplungsanordnung Kx(n)xy, Kx(n)yy, Ky(n+1)xy oder Ky(n+1)yy der hinterlegte c-Wert c ein von vorhandenen/alten c-Werten $c_{x(n)xx}$ bzw. $c_{y(n+1)xx}$ einer der anderen vorhandenen/alten thermischen Kopplungsanordnung Kx(n)xx, Kx(n)yx, Ky(n+1)xx oder Ky(+1)yx abgeleiteter c-Wert $c_{x(n)xy}$, $c_{x(n)yy}$, $c_{y(n+1)xy}$, $c_{y(n+1)yy}$ ist.

Wie in Figur 1A dargestellt, können in einer Liegenschaft somit verschiedene, insbesondere alte und neue Heizkostenverteiler 3x bzw. 3y genutzt werden und somit gemischt verbaut sein, wobei die Heizkostenverteiler 3x vorhandene Geräte sind und die Heizkostenverteiler 3y neue Geräte, beispielsweise Ersatz- oder Zusatzgeräte, darstellen. Beispielsweise kann ein vorhandener Heizkostenverteiler 3x durch einen neuen Heizkostenverteiler 3y (= Ersatzgerät) ausgetauscht worden sein. Auch kann ein neuer Heizkörper 1y mit neuer Montageplatte 2y und neuem Heizkostenverteiler 3y (= Zusatzgerät) in der Liegenschaft zusätzlich installiert worden sein.

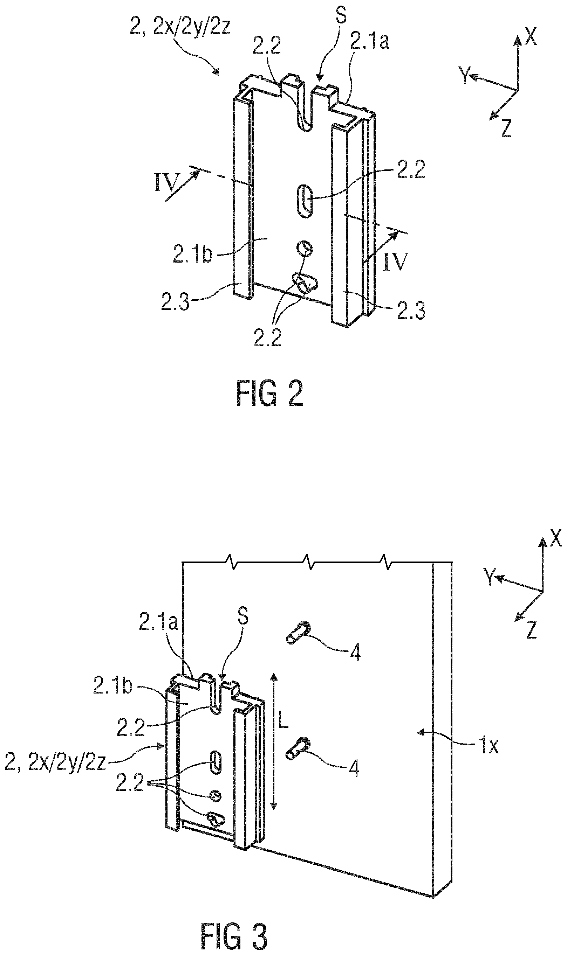

**Figuren 2 und 3** zeigen jeweils ein Ausführungsbeispiel der Montageplatte 2, welche, wie in Figur 3 gezeigt, an dem Heizkörper 1 befestigt werden kann. Die Montageplatte 2 kann eine vorhandene/alte Montageplatte 2x oder eine neue und gleiche 2y, insbesondere auch heizkörperseitig baugleiche Montageplatte 2z sein, die eine vorhandene oder alte Montageplatte 2x ersetzen soll oder die als eine neue Montageplatte 2y oder 2z montiert werden soll.

Um einen im Wesentlichen konstanten bzw. gleichmäßigen und großflächigen Wärmetransport, insbesondere eine identische oder zumindest gleiche thermische Ankopplung von Montageplatte 2 zu Heizkörper 1, bei gleicher, der Montageplatte 2 zugewandter Oberflächenstruktur des Heizkörpers, zu ermöglichen, umfasst die Montageplatte 2 beispielsweise eine entsprechend ausgebildete Oberflächenstruktur S. Insbesondere ist die Oberflächenstruktur S ein Oberflächenprofil auf einer dem Heizkörper 1 zugewandten Seite 2.1.

Die Montageplatte 2 ist aus einem thermisch leitenden Material, wie beispielsweise Metall, insbesondere Aluminium, gebildet. Insbesondere umfasst die jeweilige Montageplatte 2 auf der dem Heizkörper 1 zugewandten Seite 2.1 eine Oberflächenrauheit, die ebenfalls für einen entsprechenden Wärmetransport für eine thermische Ankopplung zwischen den Heizkörpern 1 mit gleicher der Montageplatte 2 zugewandter Oberflächenstruktur des Heizkörpers, 1 und den Montageplatten 2 angepasst ist. Die thermische Ankopplung zwischen Heizkörpern 1 und Montageplatten 2 ist identisch oder zumindest gleich bei identischen bzw. zumindest gleichen Oberflächenstrukturen S zwischen Heizkörper 1 und Montageplatte 2, insbesondere zwischen vorhandenen Heizkörpern 1x und vorhandenen Montageplatten 2x oder zwischen vorhandenen Heizkörpern 1x und neuen 2y oder heizkörperseitig gleichen Montageplatten 2z.

Zum Beispiel wird die Montageplatte 2 mittels Schweißbolzen 4 mit dem Heizkörper 1 verbunden. Hierfür weist die Montageplatte 2 eine Anzahl von Durchgangsöffnungen 2.2, beispielsweise in Form von Bohrungen und/oder Langlöchern, auf. Die Schweißbolzen 4 werden auf dem Heizkörper 1 angeordnet und beispielsweise angeschweißt. Alternativ sind diese einteilig mit dem Heizkörper 1 ausgebildet. Die Montageplatte 2 wird auf die Schweißbolzen 4 am Heizkörper 1 gesetzt und mittels dieser ausgerichtet, wobei die Schweißbolzen 4 durch die Durchgangsöffnungen 2.2 geführt werden. Anschließend wird die Montageplatte 2 an dem Heizkörper 1 und den Schweißbolzen 4 befestigt. Dabei sind die Montageplatte 2 und der Heizkörper 1 thermisch miteinander gekoppelt. Die Montageplatten 2 und/oder Heizkörper 1 sind derart ausgebildet, dass zwischen den jeweils miteinander verbundenen Montageplatten 2 und Heizkörpern 1, mit gleicher der Montageplatte 2 zugewandter Oberflächenstruktur S, eine identische oder zumindest gleiche thermische Ankopplung gegeben ist. Ist die der Montageplatte zugewandte Oberflächenstruktur des Heizkörpers 1 unterschiedlich, so ist natürlich auch keine identische oder gleiche thermische Ankopplung zur Montageplatte 2 gegeben.

Zur Befestigung der Heizkostenverteiler 3 umfasst die Montageplatte 2 Befestigungselemente 2.3. Die Befestigungselemente 2.3 sind beispielsweise in Form von Greifarmen, Befestigungshaken, Befestigungsklipsen und/oder Befestigungsschienen ausgebildet. Insbesondere sind die Befestigungselemente 2.3 auf einer von dem Heizkörper 1 abgewandten Seite 2.1' angeordnet. Beispielsweise ragen die Befestigungselemente 2.3 von dieser Seite 2.1' ab.

Die Montageplatte 2 ist mit verschiedenen oder identischen, parametrierbaren Heizkostenverteilern 3 kompatibel und koppelbar. Zudem ist die Montageplatte 2 derart ausgebildet, dass sie mit verschiedenen oder identischen Heizkörpern 1 gut reproduzierbar thermisch koppelbar ist. Insbesondere ist die Oberflächenstruktur S der jeweiligen Montageplatte 2 vorgesehen, um eine gut reproduzierbare thermische Ankopplung an unterschiedlichen Heizkörpern 1 bereitzustellen.

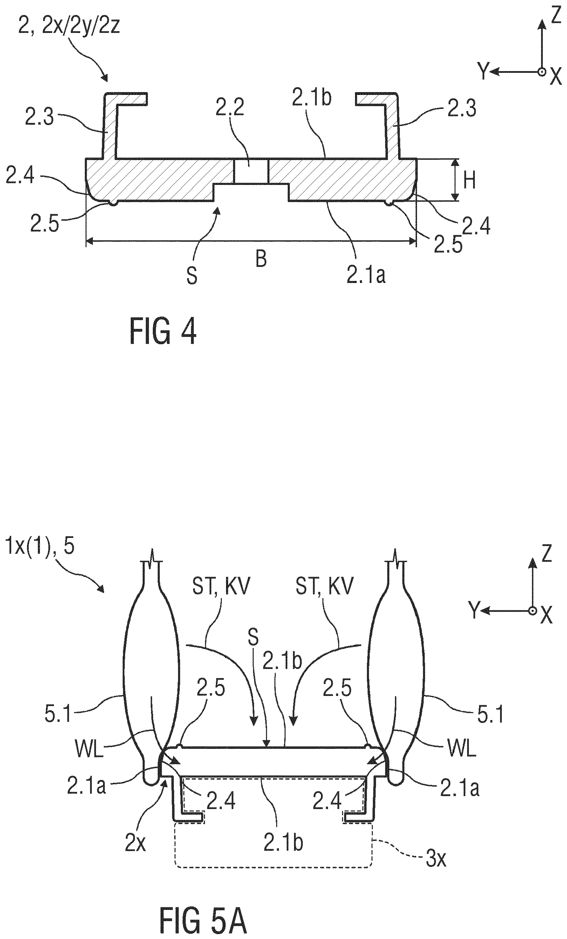

**Figur 4** zeigt schematisch eine Schnittdarstellung eines Ausführungsbeispiels der Montageplatte 2. Die Montageplatte 2 kann eine vorhandene/alte Montageplatte 2x oder eine neue Montageplatte 2y darstellen, welche zumindest heizkörperseitig baugleich 2z zu einer der vorhandenen/alten Montageplatten 2x ist.

**Figur 5A** zeigt schematisch eine Schnittdarstellung eines Ausführungsbeispiels der Montageplatte 2x, welche an einem Gliederheizkörper 1x(1) angeordnet ist.

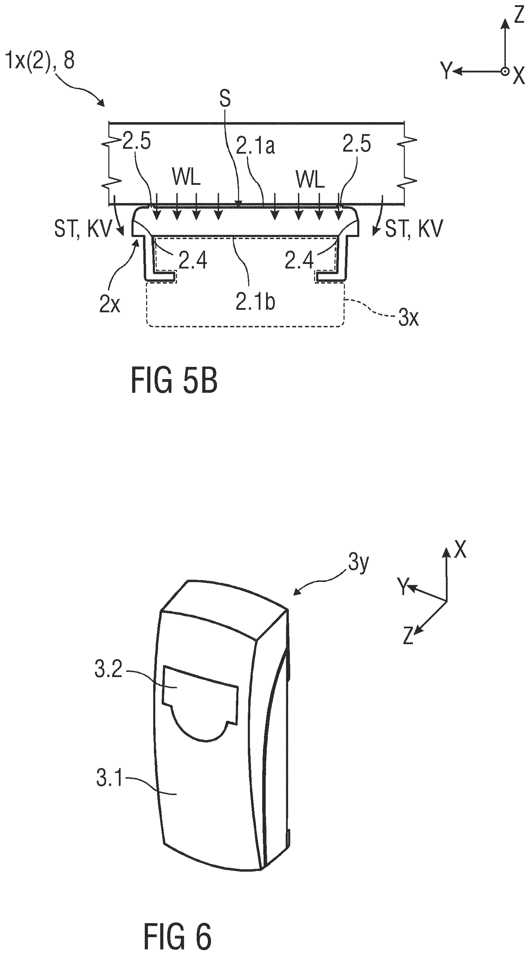

**Figur 5B** zeigt schematisch eine Schnittdarstellung eines Ausführungsbeispiels der Montageplatte 2x, welche an einem plattenförmigen Heizkörper 1x(2) angeordnet ist.

Wie in den Figuren 4 und 5A gezeigt, umfasst die Oberflächenstruktur S bzw. das Oberflächenprofil beispielsweise abgerundete äußere Kanten 2.4, um eine verbesserte Kontaktfläche mit einem Oberflächenprofil auf einer der Montageplatte 2 zugewandten Seite des Heizkörpers 1 zu ermöglichen. Im Fall eines Gliederheizkörpers 5, wie in Figur 5A dargestellt, ist die Montageplatte 2x zwischen zwei Gliedern 5.1 des Gliederheizkörpers 5 angeordnet. Die Glieder 5.1 können im Oberflächenprofil mit den äußeren bzw. seitlichen Kanten 2.4 der Montageplatte 2 in wärmeleitendem Kontakt stehen.

Die abgerundeten Kanten 2.4 weisen beispielsweise einen Radius von 1,5 mm auf.

Beispielsweise ist die dem Heizkörper 1 zugewandte Seite 2.1 im Wesentlichen flächig, insbesondere großflächig und/oder eben ausgebildet. Dabei ist die Montageplatte 2 beispielsweise im Wesentlichen quadratisch oder rechteckig ausgebildet. Beispielsweise umfasst die Montageplatte 2 eine in Figur 2 gezeigte Länge L von 50 mm bis 80 mm, insbesondere 60 mm bis 75 mm. Eine in Figur 4 gezeigte Breite B der Montageplatte 2 beträgt beispielsweise 35 mm bis 50 mm, insbesondere 40 mm. Des Weiteren kann die Montageplatte 2 eine in Figur 4 gezeigte Tiefe bzw. Höhe H von 2,5 mm bis 10 mm, insbesondere 5 mm, aufweisen.

Die Befestigungselemente 2.3 weisen beispielsweise eine Tiefe von 2,5 mm bis 4 mm auf. Die Befestigungselemente 2.3 sind beispielsweise spiegelsymmetrisch ausgebildet und sind voneinander beabstandet auf der Seite 2.1' angeordnet. Dabei können die Befestigungselemente 2.3 im Wesentlichen flexibel, insbesondere reversibel flexibel, ausgebildet sein, so dass der Heizkostenverteiler 3 in einfacher Weise montierbar und demontierbar ist.

Gemäß einer Weiterbildung sind auf der Seite 2.1, insbesondere der dem Heizkörper 1 zugewandten Seite 2.1, Ausformungen 2.5 ausgebildet. Die Ausformungen 2.5 können zur Unterstützung einer Wärmeübertragung, insbesondere zur Ausbildung einer gut reproduzierbaren thermischen Ankopplung zwischen Heizkörper 1 und Montageplatte 2 entsprechend ausgebildet sein. Die Ausformungen 2.5 ragen in Richtung des Heizkörpers 1 von der Seite 2.1 ab. Beispielsweise weisen die Ausformungen 2.5 einen Radius von 0,5 mm auf.

Für einen Wärmetransport vom Heizkörper 1 zum Heizkostenverteiler 3 sind drei Wärmetransportmechanismen von Bedeutung: Wärmeleitung WL, Konvektion KV und Strahlung ST. Durch eine entsprechende Ausbildung der dem Heizkörper 1 zugewandten Seite 2.1 der Montageplatte 2 kann ein im Wesentlichen großflächiger Wärmetransport und insbesondere eine gut reproduzierbare thermische Ankopplung an den Heizkörper 1 ermöglicht werden.

In Figuren 5A und 5B sind somit verschiedene Heizkörper 1x dargestellt, an welche die gleiche Montageplatte 2x montiert ist.

**Figur 6** zeigt schematisch eine perspektivische Darstellung eines Ausführungsbeispiels des Heizkostenverteilers 3 in Draufsicht auf dessen Gehäuse 3.1 mit einer Anzeigeeinheit 3.2 zur Ausgabe von Verbrauchswerten und/oder anderen Daten.

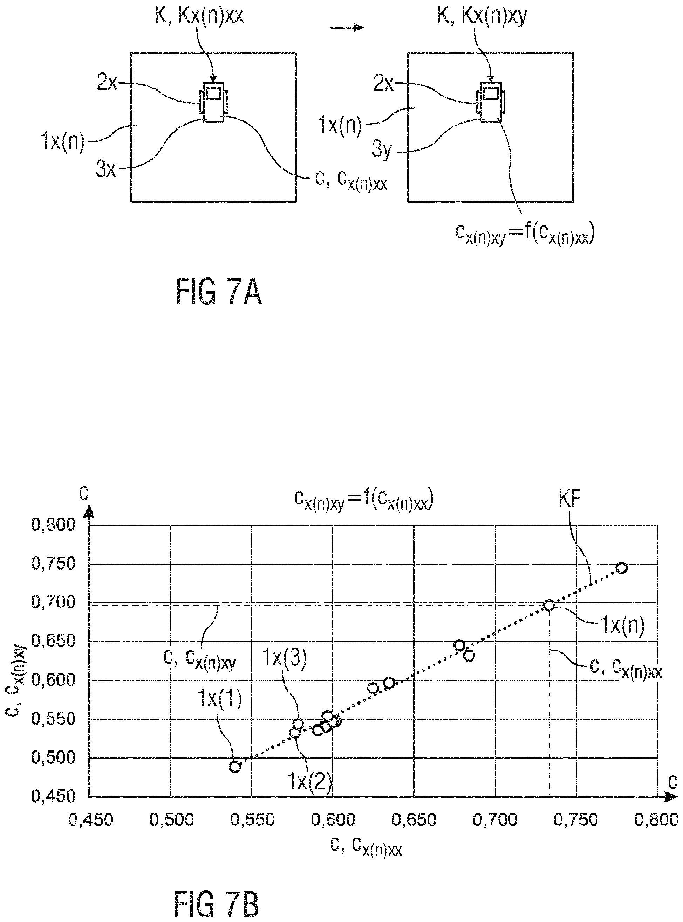

**Figur 7A** zeigt schematisch den Austausch eines vorhandenen Heizkostenverteilers 3x gegen einen neuen Heizkostenverteiler 3y auf eine vorhandene Montageplatte 2x und einen vorhandenen Heizkörper 1x(n). Dabei bilden der vorhandene Heizkostenverteiler 3x auf der vorhandenen Montageplatte 2x und dem vorhandenen Heizkörper 1x(n) eine erste thermische Kopplungsanordnung Kx(n)xx. Der neue Heizkostenverteiler 3y auf der vorhandenen Montageplatte 2x und dem vorhandenen Heizkörper 1x(n) bilden eine zweite thermische Kopplungsanordnung Kx(n)xy.

Zur Parametrierung des neuen Heizkostenverteilers 3y der zweiten thermischen Kopplungsanordnung Kx(n)xy wird im neuen Heizkostenverteiler 3y als c-Wert c ein von dem vorhandenen c-Wert $c_{x(n)xx}$ der vorhergehenden thermischen Kopplungsanordnung Kx(n)xx mit dem auszutauschenden/vorhandenen Heizkostenverteiler 3x neuer und abgeleiteter c-Wert $c_{x(n)xy}$ hinterlegt und verwendet. Dabei kann der neue und abgeleitete c-Wert $c_{x(n)xy}$ anhand eines funktionalen Zusammenhangs $c_{x(n)xy} = f(c_{x(n)xx})$ ermittelt werden.

Zur Bestimmung des abgeleiteten c-Werts $c_{x(n)xy}$ des neuen Heizkostenverteilers 3y aus dem vorhandenen c-Wert $c_{x(n)xx}$ des vorhandenen Heizkostenverteilers 3x wird ein funktionaler Zusammenhang der c-Werte $c_{x(n)}$ benutzt, der nachfolgend näher beschrieben ist.

**Figur 7B** zeigt schematisch ein Ausführungsbeispiel einer Korrelationsanalyse zur Ermittlung eines funktionalen Zusammenhangs der c-Werte c unterschiedlicher Heizkostenverteiler 3x und 3y auf identischen oder zumindest heizkörperseitig identischen oder zumindest gleichen, insbesondere baugleichen Montageplatten 2x mit unterschiedlicher thermischer Ankopplung an eine Vielzahl verschiedener vorhandener Heizkörper 1x(1) bis 1x(n). Jeder Punkt des Diagramms steht für einen anderen Heizkörpertyp. Die Analyse liefert einen umso allgemeiner anwendbaren funktionalen Zusammenhang, umso verschiedener die Ausführungsformen, umso verschiedener die thermischen Kopplungen der Montageplatte 2x an die ausgewählten Heizkörper 1x(1) bis 1x(n) sind; Plattenheizkörper, Radiatoren aus Stahl und Guss, Badheizkörper, Rohrheizkörper, usw.

Die y-Achse beschreibt c-Werte $c_{x(1)xy}$ bis $c_{x(n)xy}$ für einen beispielsweise neuen Zweifühler-Heizkostenverteiler 3y auf einer vorhandenen Montageplatte 2x für diverse Heizkörper 1x(1) bis 1x(n). Die x-Achse beschreibt c-Werte $c_{x(1)xx}$ bis $c_{x(n)xx}$ für einen vorhandenen Zweifühler-Heizkostenverteiler 3x auf einer vorhandenen Montageplatte 2x, mit unterschiedlichsten thermischen Ankopplungen an die Heizkörper 1x(1) bis 1x(n). Beispielsweise unterscheiden sich die Heizkostenverteiler 3x und 3y jeweils in ihrer Messelektronik. Insbesondere sind die y-Werte als Funktion der x-Werte dargestellt. Der funktionale Zusammenhang kann abweichend von der Darstellung natürlich auch nicht linear sein.

Dabei ist in jedem vorhandenen Heizkostenverteiler 3x z. B. wenigstens ein alter oder vorhandener c-Wert $c_{x(n)xx}$ (= $c_{2F}$(1x(n), 2x, 3x)) hinterlegt, der eine thermische Ankopplung zwischen dem vorhandenen Heizkörper 1x(n), der vorhandenen Montageplatte 2x und dem vorhandenen Heizkostenverteiler 3x beschreibt.

In jedem neuen Heizkostenverteiler 3y ist wenigstens ein neuer c-Wert $c_{x(n)xy}$ (= $c_{2F}$(1x(n), 2x, 3y)) hinterlegt, der eine thermische Ankopplung zwischen dem vorhandenen oder alten Heizkörper 1x(n), der vorhandenen Montageplatte 2x und dem neuen Heizkostenverteiler 3y beschreibt. Zur Vereinfachung der Parametrierung des neuen Heizkostenverteilers 3y ist dessen hinterlegter, neuer c-Wert $c_{x(n)xy}$ von dem vorhandenen c-Wert $c_{x(n)xx}$ des vorhandenen Heizkostenverteilers 3x mit vorhandener Montageplatte 2x abgeleitet gemäß der Funktion $c_{x(n)xy} = f(c_{x(n)xx})$.

Die mit der Erfindung erzielten Vorteile bestehen insbesondere darin, dass z. B. beim vollständigen Austausch einer alten Heizkostenverteiler-Generation durch eine neue Heizkostenverteiler-Generation, zum Beispiel bei einem Austausch von Nicht-Funk-Heizkostenverteilern durch Funk-Heizkostenverteiler, die alten Montageplatten 2x auf den alten Heizkörpern 1x verbleiben können und die neuen c-Werte $c_{x(n)xy}$ aus den alten $c_{x(n)xx}$ abgeleitet werden können. Die dadurch erzielten Einsparungen betreffen dann in Summe die Kosten für nicht benötigte neue Montageplatten 2y, die De- und Neumontage der Montageplatten 2x/2y/2z sowie die Ermittlung der neuen c-Werte $c_{x(n)xy}$ für die neuen Kopplungsanordnungen Kx(n)xy. Insbesondere letzteres ist von großem Nutzen, da die für den alten Heizkostenverteiler 3x vorhandene c-Wert-Datenbank nicht für den neuen Heizkostenverteiler 3y neu im Labor erstellt werden muss, sondern über die funktionale Beziehung $c_{x(n)xy}=f(c_{x(n)xx})$ der c-Werte c abgeleitet werden kann.

Unter einem alten oder neuen Heizkostenverteiler 3x oder 3y wird insbesondere ein Heizkostenverteiler für die Verbrauchserfassung von Raumheizflächen-Geräten gemäß DIN EN 834 verstanden. Der alte oder neue Heizkostenverteiler 3x oder 3y dient der Erfassung der anteiligen Wärmeabgabe von Heizkörpern 1 in Nutzeinheiten oder Abrechnungseinheiten 6 eines Gebäudes 7.

Der c-Wert c ist ein Maß für den Grad der thermischen Ankopplung des Temperatursensors oder der Temperatursensoren an die zu erfassenden Temperaturen. Der c-Wert c ist beispielsweise als Temperaturdifferenz-Verhältnis definiert. Der c-Wert c ist dabei zur Parametrierung des alten oder neuen Heizkostenverteilers 3x oder 3y und insbesondere für eine Korrektur der gemessenen Temperaturwerte und daraus resultierender Verbrauchsdaten, verwendbar.

Der erfasste Verbrauchswert ist insbesondere ein Näherungswert für die in einer Messzeit von einer Heizfläche eines Heizkörpers 1 abgegebene und vom Nutzer verbrauchte Wärme. Der Verbrauchswert ist dabei ein Messergebnis, das Eigenschaften des Heizkörpers (Nennleistung, Heizkörperexponent) sowie zusätzlichen Bewertungsfaktoren und der Montage (Höhe)berücksichtigt. Aus diesem Grunde muss der jeweilige alte oder neue Heizkostenverteiler 3x oder 3y individuell parametriert werden. Die Anforderungen an die Parametrierung des jeweiligen alten oder neuen Heizkostenverteilers 3x oder 3y mit Ein- oder Zweifühlersystemen sind allgemein in der DIN EN 834 beschrieben.

In einer möglichen Ausführungsform ist der neue Heizkostenverteiler 3y, dessen neuer c-Wert $c_{x(n)xy}$ von einer anderen thermischen Kopplungsanordnung Kx(n)xx abgeleitetet wurde, ein Ersatzgerät für einen, insbesondere ursprünglichen, ausgetauschten oder auszutauschenden oder vorhandenen Heizkostenverteiler 3x mit derselben Montageplatte 2x.

Zur Charakterisierung der thermischen Ankopplung eines neuen Heizkostenverteilers 3y an einem vorhandenen Heizkörper 1x(n) mittels einer vorhandenen Montageplatte 2x wird vorliegend als c-Wert ein abgeleiteter c-Wert $c_{x(n)xy}$ angesetzt, der wie folgt bestimmt wird:

$$c_{x(n)xy} = A \quad * c_{x(n)xx} + B \tag{4a}$$

wobei A der Anstieg und B der Offset des beispielsweise linearen Zusammenhangs zwischen den alten c-Werten $c_{x(1)xx}$ bis $c_{x(n)xx}$ der alten thermischen Kopplungsanordnungen Kx(1)xx bis Kx(n)xx (alte Heizkörper 1x(1) bis 1x(n), alte Montageplatte 2x, alter Heizkostenverteiler 3x = alte/auszutauschende/ausgetauschte Kopplungsanordnung Kx(1)xx bis Kx(n)xx) und den neuen c-Werten $c_{x(1)xy}$ bis $c_{x(n)xy}$ der neuen thermischen Kopplungsanordnungen Kx(1)xy bis Kx(n)xy (vorhandener Heizkörper 1x(1) bis 1x(n), vorhandene oder identische/gleiche Montageplatte 2x, neuer Heizkostenverteiler 3y = neue Kopplungsanordnung Kx(1)xy bis Kx(n)xy) ist,

mit x = Kennzeichnung vorhandener Komponenten in einer vorhandenen thermischen Kopplungsanordnung Kx(n)xx (vorhandene Heizkörper 1x(n), vorhandene erste Montageplatte 2x plus vorhandener Heizkostenverteiler 3x) und y= Kennzeichnung neuer Komponenten in einer neuen thermischen Kopplungsanordnung Kx(n)xy (vorhandene Heizkörper 1x(n), vorhandene Montageplatte 2x neuer Heizkostenverteiler 3y) für den neuen c-Werte $c_{x(n)xy}$ errechnet werden soll. Der vorhandene Heizkörper 1x kennzeichnet eine Vielzahl von Heizkörpern 1, insbesondere mehrere hundert oder tausend von Heizkörpern, für die ein c-Wert in Verbindung mit der alten Montageplatte 2x und dem alten Heizkostenverteiler 3y vorliegt.

Vorteilhaft kann die Erfindung auch auf die Verwendung von Ersatzgeräten angewandt werden, denn sie ermöglicht den Mischverbau unterschiedlicher Heizkostenverteiler 3, 3x/3y, indem sie es ermöglicht über die funktionale Beziehung zwischen den alten c-Werten $c_{xxx}$ der alten Kopplungsanordnung Kxxx und den neuen c-Werten $c_{xxy}$, $c_{xyy}$ oder $c_{xzy}$ der neuen Kopplungsanordnungen Kxxy Kxyy bzw. Kxzy die Korrektur der Temperaturmesswerte so zu korrigieren, dass der neue Heizkostenverteiler 3y dieselben Temperaturen bzw. Temperaturdifferenzen berechnet wie der alte Heizkostenverteiler 3x, auch wenn der neue Heizkostenverteiler 3y einen völlig anderen Aufbau besitzt.

Damit der neue Heizkostenverteiler 3y einen identischen Verbrauchswert im Vergleich zum alten Heizkostenverteiler 3x ermitteln kann, müssen die vom Neugerät (= neuer Heizkostenverteiler 3y) gemessenen Temperaturdifferenzen in die Werte des zu ersetzenden, alten Gerätes (= alter Heizkostenverteiler 3x) umgerechnet werden. Durch Umstellen der Gleichung (7) und Einsetzen in Gleichung (4a) erhält man:

$$\Delta t_{Sxxx} = \frac{(1-c_{nx})}{(1-A_n c_{nx}-B_n)} * \Delta t_{Sxxy} \tag{8a},$$

eine Definition zur Ermittlung oder Berechnung der Temperaturdifferenz des alten Heizkostenverteilers 3x (Heizkörper 1x, Montageplatte 2x und Heizkostenverteiler 3x) als Funktion der Temperaturmesswerte des neuen Heizkostenverteilers 3y, Ersatz- oder Zusatzgerät. Der neue Heizkostenverteiler 3y arbeitet hierbei als messtechnisch kompatibler, parametrierbarer Heizkostenverteiler 3. Er berechnet aus der gemessenen Temperaturdifferenz die Temperaturdifferenz des alten Heizkostenverteilers 3x als Funktionen des c-Wertes $c_{xxy}$ für den neuen Heizkostenverteiler 3y auf dem (Ziel-) Heizkörper 1x. Da der Verbrauchswert eines Heizkostenverteilers 3x, 3y als Integral der bewerteten Temperaturdifferenz gebildet wird, ist somit die Berechnung eines identischen Verbrauchswertes durch das Ersatzgerät gewährleistet.

BEZUGSZEICHENLISTE

| | |
|---|---|
| 1x(n) | alte (vorhandene) Heizkörper |
| 1y(n+1) | neuer Heizkörper |
| 2x | alte (vorhandene) Montageplatte |
| 2y | neue Montageplatte |
| 2z | neue Montageplatte, heizkörperseitig identisch zu 2x |
| 2.1a | heizkörperzugewandte Oberflächenseite |
| 2.1b | heizkörperabgewandte Oberflächenseite |
| 2.2 | Durchgangsöffnung |
| 2.3 | Befestigungselement |
| 2.4 | Kante |
| 2.5 | Ausformung |
| 3x | alter (vorhandener) Heizkostenverteiler |
| 3y | neuer Heizkostenverteiler |
| 3.1 | Gehäuse |
| 3.2 | Anzeigeeinheit |
| 4 | Schweißbolzen |
| 5 | Gliederheizkörper |
| 5.1 | Glieder |
| 6 | Abrechnungseinheit |
| 7 | Gebäude |
| 8 | Plattenheizkörper |
| | |
| A | Anordnung |
| c | c-Wert |
| $c_{x(n)xx}$ | alter c-Wert für alte (vorhandene) thermische Kopplungsanordnung mit altem Heizkörper n, alter Montageplatte x und altem Heizkostenverteiler x |
| $c_{x(n)xy}$ | neuer c-Wert (von $c_{x(n)xx}$ abgeleiteter) c-Wert für thermische Kopplungsanordnung mit Heizkörper n, alter Montageplatte x und neuem Heizkostenverteiler y |
| $c_{y(n+1)xy}$ | neuer c-Wert für neue thermische Kopplungsanordnung mit neuem Heizkörper n+1, alter Montageplatte x und neuem Heizkostenverteiler y |
| $c_{x(n)yx}$ | neuer c-Wert für thermische Kopplungsanordnung mit Heizkörper n, neuer Montageplatte y und altem Heizkostenverteiler x |
| $c_{x(n)zx}$ | neuer c-Wert für thermische Kopplungsanordnung mit Heizkörper n, neuer Montageplatte z und altem Heizkostenverteiler x |
| B | Breite |
| H | Höhe |
| KF | Relationsgraph ($c_{x(n)xy} = f(c_{x(n)xx})$) |
| KV | Konvektion |
| K | verschiedenartige thermische Kopplungsanordnungen |
| Kx(n)xx | alte (vorhandene) thermische Kopplungsanordnungen K(1x(n), 2x, 3x) |
| Kx(n)xy | neue thermische Kopplungsanordnungen K(1x(n), 2x, 3y) |
| Ky(n+1)xy | neue thermische Kopplungsanordnungen K(1y(n+1), 2x, 3y) |
| Kx(n)yx | neue thermische Kopplungsanordnungen K(1x(n), 2y, 3x) |
| Kx(n)zx | neue thermische Kopplungsanordnungen K(1x(n), 2z, 3x) |
| L | Länge |
| S | Oberflächenstruktur |
| ST | Strahlung |
| VE | Verbrauchswerterfassungseinheit |

WL        Wärmeleitung

X    Längsausdehnung
Y    Querausdehnung
Z    Hochausdehnung

**Patentansprüche**

1. Anordnung (A) zur Verbrauchswerterfassung in mindestens einer Abrechnungseinheit (6) einer Liegenschaft, umfassend:

    - eine Mehrzahl von Montageplatten (2, 2x, 2y, 2z),
    - eine Mehrzahl von Heizkörpern (1x, 1y) und
    - eine Mehrzahl von Heizkostenverteilern (3x, 3y),
    - eine Mehrzahl von thermischen Kopplungsanordnungen (K), wobei
    - an jeweils einem Heizkörper (1x, 1y) jeweils eine Montageplatte (2x, 2y, 2z) montiert ist und an dieser Montageplatte (2x, 2y, 2z) auf der vom Heizkörper (1x, 1y) abgewandten Seite der Montageplatte (2x, 2y, 2z) ein Heizkostenverteiler (3x, 3y) montiert ist, wobei der Heizkörper (1), die zugehörige Montageplatte (2x, 2y, 2z) und der zugehörige Heizkostenverteiler (3x, 3y) zusammen eine der thermischen Kopplungsanordnungen (K) bilden,
    - in jedem Heizkostenverteiler (3x) wenigstens ein c-Wert (c) mindestens einer der thermischen Kopplungsanordnungen (K) hinterlegt ist, wobei der jeweilige c-Wert (c) eine thermische Ankopplung zwischen dem jeweiligen Heizkostenverteiler (3x, 3y), dem jeweiligen Heizkörper (1x, 1y) und der zwischen diesen angeordneten Montageplatte (2x, 2y, 2z) beschreibt,

    **dadurch gekennzeichnet, dass**

    - die Anordnung wenigstens einen neuen Heizkostenverteiler (3y) umfasst und bei dem wenigstens einen neuen Heizkostenverteiler (3y) wenigstens einer neuen thermischen Kopplungsanordnung (Kxxy, Kxyy, Kxzy) der hinterlegte c-Wert (c) ein von einem vorhandenen c-Wert ($c_{xxx}$) einer anderen thermischen vorhandenen Kopplungsanordnung (Kxxx) abgeleiteter c-Wert ($c_{xxy}$, $c_{xyy}$, $c_{xzy}$) ist.

2. Anordnung (A) nach Anspruch 1,
    **dadurch gekennzeichnet, dass**

    - ein neuer Heizkostenverteiler (3y), dessen hinterlegter c-Wert (c) der von einer der vorhandenen thermischen Kopplungsanordnungen (Kxxx) abgeleitete neue c-Wert ($c_{xxy}$, $c_{xyy}$, $c_{xzy}$) ist, ein Ersatzgerät für einen auszutauschenden oder vorhandenen Heizkostenverteiler (3x) mit derselben (2x) oder der zumindest heizkörperseitig identischen Montageplatte (2z) ist.

3. Anordnung (A) nach Anspruch 1 oder 2,
    **dadurch gekennzeichnet, dass**

    - der neue Heizkostenverteiler (3y), dessen hinterlegter c-Wert (c) der von einer der anderen vorhandenen thermischen Kopplungsanordnungen (Kxxx) abgeleitete c-Wert ($c_{xxy}$, $c_{xyy}$, $c_{yyy}$) ist, ein Ersatzgerät für einen auszutauschenden oder vorhandenen Heizkostenverteiler (3x) mit einer neuen und zur vorhandenen Montageplatte (2x) gleichen (2y) oder zumindest heizkörperseitig identischen Montageplatte (2z) ist.

4. Anordnung (A) nach einem der vorhergehenden Ansprüche,
    **dadurch gekennzeichnet, dass**

    - der zumindest eine neue Heizkostenverteiler (3y), dessen hinterlegter c-Wert (c) der von der anderen vorhandenen thermischen Kopplungsanordnung (Kxxx) abgeleitete c-Wert ($c_{xxy}$, $c_{xyy}$, $c_{yyy}$) ist, ein Ersatzgerät für einen auszutauschenden oder vorhandenen Heizkostenverteiler (3x) mit demselben Heizkörper (1x) oder einem neuen und zum vorhandenen Heizkörper (1x) gleichen Heizkörper (1y) ist.

5. Anordnung (A) nach einem der vorhergehenden Ansprüche,

**dadurch gekennzeichnet, dass**

- der neue Heizkostenverteiler (3y), dessen hinterlegte c-Wert (c) der von der anderen vorhandenen thermischen Kopplungsanordnung (Kxxx) abgeleitete c-Wert ($c_{xxy}$, $c_{xyy}$, $c_{xzy}$) ist, ein Ersatzgerät für einen auszutauschenden Heizkostenverteiler (3x) mit einer neuen oder zusätzlichen Montageplatte (2y) mit gleicher Oberflächenstruktur (Sy) auf der dem Heizkörper (1x) zugewandten Seite zur Oberflächenstruktur (Sx) der vorhandenen oder auszutauschenden Montageplatte (2x) ist und
- der abgeleitete c-Wert ($c_{xxy}$, $c_{xyy}$, $c_{xzy}$) des als Ersatzgerät fungierenden neuen Heizkostenverteilers (3y) vom vorhandenen c-Wert ($c_{xxx}$) der vorhandenen thermischen Kopplungsanordnung (Kxxx) abgeleitet ist.

6. Anordnung (A) nach einem der vorhergehenden Ansprüche,
   **dadurch gekennzeichnet, dass** die Montageplatte (2x, 2y, 2z) zumindest eine Oberflächenstruktur (Sx, Sy, Sz), insbesondere ein Profil, eine Erhebung und/oder eine Ausformung, aufweist, mittels welcher diese thermisch mit dem Heizkörper (1x, 1y) gekoppelt ist.

7. Anordnung (A) nach Anspruch 6,
   **dadurch gekennzeichnet, dass** die Oberflächenstruktur (Sx, Sy) ein Oberflächenprofil auf einer dem Heizkörper (1) zugewandten Seite (2.1) der Montageplatte (2x, 2y) ist.

8. Anordnung (A) nach einem der vorhergehenden Ansprüche,
   **dadurch gekennzeichnet, dass** der Heizkostenverteiler (3x, 3y) eine Messelektronik und mindestens einen Speicher zur Hinterlegung des oder der c-Werte/s (c, $c_x$, $c_y$,) und/oder eine Datenschnittstelle zum Datenaustausch umfasst.

9. Anordnung (A) nach einem der vorhergehenden Ansprüche,
   **dadurch gekennzeichnet, dass**

   - die Montageplatte (2x, 2y, 2z) für einen Mischverbau mit oder zum Ersatz von bereits vorhandenen Montageplatten (2x) konfiguriert ist, und/oder
   - der oder die Heizkostenverteiler (3x, 3y) konfiguriert ist bzw. sind für einen Mischverbau mit oder zum Ersatz von bereits vorhandenen Heizkostenverteilern (3x) konfiguriert ist, und/oder
   - die Montageplatte (2x, 2y, 2z) und die Heizkostenverteiler (3x, 3y) miteinander gekoppelt sind und für einen Mischverbau mit oder zum vollständigen Ersatz von bereits vorhandenen Heizkostenverteilern (3x) konfiguriert sind.

10. Verfahren zur Parametrierung eines Heizkostenverteilers (3x, 3y) zur Bestimmung eines anteiligen Wärmeverbrauchs in einer Nutzeinheit oder Abrechnungseinheit (6) bezogen auf einen gesamten Wärmeverbrauch in einer Liegenschaft, insbesondere in einem Gebäude (7),
    wobei

    - eine Mehrzahl von Heizkörpern (1x, 1y) und
    - eine Mehrzahl von Montageplatten (2x, 2y, 2z) und
    - eine Mehrzahl von Heizkostenverteilern (3x, 3y) und
    - eine Anzahl von thermischen Kopplungsanordnungen (K1 bis Kn), die jeweils aus einem Heizkörper (1x, 1y) und einer an diesem montierten Montageplatte (2x, 2y, 2z) und einem auf der vom Heizkörper (1x, 1y) abgewandten Seite der Montageplatte (2x, 2y, 2z) montierten Heizkostenverteiler (3x, 3y) gebildet sind, bereitgestellt werden, wobei
    - an jedem Heizkörper (1x, 1y) jeweils eine Montageplatte (2x, 2y, 2z) montiert wird und an jeder Montageplatte (2x, 2y, 2z) ein Heizkostenverteiler (3x, 3y) montiert wird,
    - in jedem Heizkostenverteiler (3x, 3y) wenigstens ein c-Wert (cc) mindestens einer der thermischen Kopplungsanordnungen (Kx(1)xx bis Kx(n)xx) hinterlegt ist, wobei der jeweilige c-Wert ($c_x$) eine thermische Ankopplung zwischen dem jeweiligen Heizkostenverteiler (3x), dem jeweiligen Heizkörper (1x(1) bis 1x(n)) und der zwischen diesen angeordneten Montageplatte (2x) beschreibt,

    **dadurch gekennzeichnet, dass** wenigstens bei einem neuen Heizkostenverteiler (3y) mindestens einer neuen thermischen Kopplungsanordnung (Kxxy, Kxyy, Kxzy) als c-Wert (c) ein von einem c-Wert ($c_{xxx}$) einer der anderen vorhandenen thermischen Kopplungsanordnungen (Kxxx) abgeleiteter c-Wert ($c_{xxy}$, $c_{xyy}$, $c_{xzy}$) hinterlegt wird.

**11.** Verfahren nach Anspruch 10,
**dadurch gekennzeichnet, dass**
der neue Heizkostenverteiler (3y), dessen hinterlegter c-Wert (c) der von der anderen vorhandenen thermischen Kopplungsanordnungen (Kxxx) abgeleitete c-Wert ($c_{xxy}$, $c_{xyy}$, $c_{yyy}$) ist, ein Zusatz- oder Ersatzgerät für einen ausgetauschten oder auszutauschenden oder vorhandenen Heizkostenverteiler (3x) mit derselben Montageplatte (2x) ist.

**12.** Verfahren nach Anspruch 10 oder 11,
**dadurch gekennzeichnet, dass**
der neue Heizkostenverteiler (3y), dessen hinterlegter c-Wert (c) der von der vorhandenen thermischen Kopplungsanordnung (Kxxx) abgeleitete c-Wert ($c_{xxy}$, $c_{xyy}$, $c_{xzy}$) ist, ein Ersatzgerät für einen auszutauschenden oder vorhandenen Heizkostenverteiler (3x) mit einer neuen und zur vorhandenen Montageplatte (2x) gleichen (2y) oder zumindest heizkörperseitig identischen Montageplatte (2z) ist.

**13.** Verfahren nach einem der Ansprüche 10 bis 12,
**dadurch gekennzeichnet, dass** unter Verwendung des abgeleiteten c-Wertes ($c_y$) der als Ersatzgerät fungierende Heizkostenverteiler (3y) parametriert und insbesondere die Arbeitsweise und das Messverhalten des alten Heizkostenverteilers (3x) simuliert wird.

**14.** Verwendung eines Heizkostenverteilers (3) in der Anordnung nach einem der Ansprüche 1 bis 9 zur Bestimmung eines anteiligen Wärmeverbrauchs in einer Nutzeinheit bezogen auf einen gesamten Wärmeverbrauch in einer Abrechnungseinheit (6), wobei der Heizkostenverteiler (3x, 3y) gemäß dem Verfahren nach einem der Ansprüche 10 bis 13 parametriert ist.

## Claims

**1.** Arrangement (A) for consumption-value acquisition in at least one accounting unit (6) of a property, comprising:

   - a plurality of mounting plates (2, 2x, 2y, 2z),
   - a plurality of radiators (1x, 1y) and
   - a plurality of heat-cost allocators (3x, 3y),
   - a plurality of thermal coupling arrangements (K), wherein,
   - on in each case one radiator (1x, 1y), there is mounted in each case one mounting plate (2x, 2y, 2z) and, on said mounting plate (2x, 2y, 2z), there is mounted a heat-cost allocator (3x, 3y) on that side of the mounting plate (2x, 2y, 2z) which faces away from the radiator (1x, 1y), wherein the radiator (1), the associated mounting plate (2x, 2y, 2z) and the associated heat-cost allocator (3x, 3y) together form one of the thermal coupling arrangements (K),
   - at least one c value (c) of at least one of the thermal coupling arrangements (K) is stored in each heat-cost allocator (3x), wherein the respective c-value (c) describes a thermal coupling between the respective heat-cost allocator (3x, 3y), the respective radiator (1x, 1y) and the mounting plate (2x, 2y, 2z) arranged between them,

   **characterized in that**

   - the arrangement comprises at least one new heat-cost allocator (3y) and, in the case of the at least one new heat-cost allocator (3y) of at least one new thermal coupling arrangement (Kxxy, Kxyy, Kxzy), the stored c value (c) is a c value ($c_{xxy}$, $c_{xyy}$, $c_{xzy}$) derived from an existing c value ($c_{xxx}$) of another thermal, existing, coupling arrangement (Kxxx).

**2.** Arrangement (A) according to Claim 1,
**characterized in that**

   - a new heat-cost allocator (3y) whose stored c value (c) is the new c value ($c_{xxy}$, $c_{xyy}$, $c_{xzy}$) derived from one of the existing thermal coupling arrangements (Kxxx) is a replacement device for a heat-cost allocator (3x) which is to be replaced or exists that has the same mounting plate (2x) or has the mounting plate (2z) that is identical at least on the radiator side.

**3.** Arrangement (A) according to Claim 1 or 2,

**characterized in that**

- the new heat-cost allocator (3y) whose stored c value (c) is the c value ($c_{xxy}$, $c_{xyy}$, $c_{yyy}$) derived from one of the other, existing, thermal coupling arrangements (Kxxx) is a replacement device for a heat-cost allocator (3x) which is to be replaced or exists that has a new mounting plate (2y) that is identical to the existing mounting plate (2x) or new mounting plate (2z) that is identical thereto at least on the radiator side.

4. Arrangement (A) according to one of the preceding claims,
   **characterized in that**

   - the at least one new heat-cost allocator (3y) whose stored c value (c) is the c value ($c_{xxy}$, $c_{xyy}$, $c_{yyy}$) derived from the other, existing, thermal coupling arrangement (Kxxx) is a replacement device for a heat-cost allocator (3x) which is to be replaced or exists that has the same radiator (1x) or has a new radiator (1y) that is identical to the existing radiator (1x).

5. Arrangement (A) according to one of the preceding claims,
   **characterized in that**

   - the new heat-cost allocator (3y) whose stored c value (c) is the c value ($c_{xxy}$, $c_{xyy}$, $c_{xzy}$) derived from the other, existing, thermal coupling arrangement (Kxxx) is a replacement device for a heat-cost allocator (3x) which is to be replaced that has a new or additional mounting plate (2y) with an identical surface structure (Sy) on the side facing towards the radiator (1x) in relation to the surface structure (Sx) of the mounting plate (2x) which exists or is to be replaced, and
   - the derived c value ($c_{xxy}$, $c_{xyy}$, $c_{xzy}$) of the new heat-cost allocator (3y) functioning as the replacement device is derived from the existing c value ($c_{xxx}$) of the existing thermal coupling arrangement (Kxxx).

6. Arrangement (A) according to one of the preceding claims,
   **characterized in that** the mounting plate (2x, 2y, 2z) has at least one surface structure (Sx, Sy, Sz), in particular a profile, an elevation and/or a formation, by means of which it is thermally coupled to the radiator (1x, 1y).

7. Arrangement (A) according to Claim 6,
   **characterized in that** the surface structure (Sx, Sy) is a surface profile on a side (2.1) of the mounting plate (2x, 2y) that faces towards the radiator (1).

8. Arrangement (A) according to one of the preceding claims,
   **characterized in that** the heat-cost allocator (3x, 3y) comprises measurement electronics and at least one memory for storing the c value(s) (c, $c_x$, $c_y$) and/or a data interface for exchange of data.

9. Arrangement (A) according to one of the preceding claims,
   **characterized in that**

   - the mounting plate (2x, 2y, 2z) is configured for mixed installation with, or for replacement of, pre-existing mounting plates (2x), and/or
   - the heat-cost allocator(s) (3x, 3y) is/are configured for mixed installation with, or for replacement of, pre-existing heat-cost allocators (3x), and/or
   - the mounting plate (2x, 2y, 2z) and the heat-cost allocators (3x, 3y) are coupled to one another and are configured for mixed installation with, or for complete replacement of, pre-existing heat-cost allocators (3x).

10. Method for parameterizing a heat-cost allocator (3x, 3y) for determining a proportionate heat consumption in a usage unit or accounting unit (6) in relation to a total heat consumption in a property, in particular in a building (7), wherein

    - a plurality of radiators (1x, 1y) and
    - a plurality of mounting plates (2x, 2y, 2z) and
    - a plurality of heat-cost allocators (3x, 3y) and
    - a number of thermal coupling arrangements (K1 to Kn), each of which is formed from a radiator (1x, 1y) and a mounting plate (2x, 2y, 2z) mounted thereon and a heat-cost allocator (3x, 3y) mounted on that side of the mounting plate (2x, 2y, 2z) which faces away from the radiator (1x, 1y), are provided,

wherein,

- on each radiator (1x, 1y), there is mounted in each case one mounting plate (2x, 2y, 2z) and, on each mounting plate (2x, 2y, 2z), there is mounted a heat-cost allocator (3x, 3y),
- at least one c value (cc) of at least one of the thermal coupling arrangements (Kx(1)xx to Kx(n)xx) is stored in each heat-cost allocator (3x, 3y), wherein the respective c-value ($c_x$) describes a thermal coupling between the respective heat-cost allocator (3x), the respective radiator (1x(1) to 1x(n)) and the mounting plate (2x) arranged between them,

**characterized in that**, at least in the case of a new heat-cost allocator (3y) of at least one new thermal coupling arrangement (Kxxy, Kxyy, Kxzy), a c value ($c_{xxy}$, $c_{xyy}$, $c_{xzy}$) derived from a c value ($c_{xxx}$) of one of the other, existing, thermal coupling arrangements (Kxxx) is stored as c value (c).

**11.** Method according to Claim 10,
**characterized in that**
the new heat-cost allocator (3y) whose stored c value (c) is the c value ($c_{xxy}$, $c_{xyy}$, $c_{yyy}$) derived from the other, existing, thermal coupling arrangement (Kxxx) is an auxiliary or replacement device for a heat-cost allocator (3x) which has been or is to be replaced or exists that has the same mounting plate (2x).

**12.** Method according to Claim 10 or 11,
**characterized in that**
the new heat-cost allocator (3y) whose stored c value (c) is the c value ($c_{xxy}$, $c_{xyy}$, $c_{xzy}$) derived from the existing thermal coupling arrangement (Kxxx) is a replacement device for a heat-cost allocator (3x) which is to be replaced or exists that has a new mounting plate (2y) that is identical to the existing mounting plate (2x) or new mounting plate (2z) that is identical thereto at least on the radiator side.

**13.** Method according to one of Claims 10 to 12,
**characterized in that**, using the derived c value ($c_y$), the heat-cost allocator (3y) functioning as replacement device is parameterized and in particular the method of operation and the measurement behaviour of the old heat-cost allocator (3x) is simulated.

**14.** Use of a heat-cost allocator (3) in the arrangement according to one of Claims 1 to 9 for determining a proportionate heat consumption in a usage unit in relation to a total heat consumption in an accounting unit (6), wherein the heat-cost allocator (3x, 3y) is parameterized according to the method according to one of Claims 10 to 13.

## Revendications

**1.** Dispositif (A) d'acquisition de valeurs de consommation dans au moins une unité de facturation (6) d'un bien immobilier, ledit dispositif comprenant :

- une pluralité de plaques de montage (2, 2x, 2y, 2z),
- une pluralité de radiateurs (1x, 1y) et
- une pluralité de répartiteurs de frais de chauffage (3x, 3y),
- une pluralité de dispositifs de couplage thermique (K),
- une plaque de montage (2x, 2y, 2z) étant montée sur chaque radiateur (1x, 1y) et un répartiteur de coût de chauffage (3x, 3y) étant monté sur ladite plaque de montage (2x, 2y, 2z) du côté de la plaque de montage (2x, 2y, 2z) qui est opposé au radiateur (1x, 1y), le radiateur (1), la plaque de montage associée (2x, 2y, 2z) et le répartiteur de frais de chauffage associé (3x, 3y) formant conjointement un des dispositifs de couplage thermique (K),
- au moins une c-valeur (c) d'au moins un des dispositifs de couplage thermique (K) étant stockée dans chaque répartiteur de frais de chauffage (3x), la c-valeur (c) décrivant un couplage thermique entre le répartiteur de frais de chauffage respectif (3x, 3y), le radiateur respectif (1x, 1y) et la plaque de montage (2x, 2y, 2z) disposée entre eux,

**caractérisé en ce que**

- le dispositif comprend au moins un nouveau répartiteur de frais de chauffage (3y) et dans l'au moins un nouveau répartiteur de frais de chauffage (3y) d'au moins un nouveau dispositif de couplage thermique (Kxxy, Kxyy, Kxzy) la c-valeur stockée (c) étant une c-valeur ($c_{xxy}$, $c_{xyy}$, $c_{xzy}$) dérivée d'une c-valeur (c) existante ($c_{xxx}$) d'un autre dispositif de couplage thermique existant (Kxxx).

**2.** Dispositif (A) selon la revendication 1,
**caractérisé en ce que**

- un nouveau répartiteur de frais de chauffage (3y), dont la c-valeur (c) stockée est la nouvelle c-valeur ($c_{xxy}$, $c_{xyy}$, $c_{xzy}$) dérivée de l'un des dispositifs de couplage thermique existants (Kxxx), est un appareil de remplacement d'un répartiteur de frais de chauffage (3x) existant ou à remplacer qui comporte la même plaque de montage (2x) ou la plaque de montage identique au moins côté radiateur (2z).

**3.** Dispositif (A) selon la revendication 1 ou 2,
**caractérisé en ce que**

- le nouveau répartiteur de frais de chauffage (3y), dont la c-valeur (c) stockée est la c-valeur ($c_{xxy}$, $c_{xyy}$, $c_{yyy}$) dérivée de l'un des dispositifs de couplage thermique existants (Kxxx), est un appareil de remplacement d'un répartiteur de frais de chauffage (3x) existant ou à remplacer qui comporte une plaque de montage (2y) nouvelle et identique à la plaque de montage présente (2x) ou une plaque de montage (2z) nouvelle et identique au moins côté radiateur.

**4.** Dispositif (A) selon l'une des revendications précédentes,
**caractérisé en ce que**

- l'au moins un nouveau répartiteur de frais de chauffage (3y), dont la c-valeur (c) stockée est la c-valeur ($c_{xxy}$, $c_{xyy}$, $c_{yyy}$) dérivée de l'autre dispositif de couplage thermique existant (Kxxx), est un appareil de remplacement d'un répartiteur de frais de chauffage (3x) existant ou à remplacer qui comporte le même radiateur (1x) ou un radiateur (1y) nouveau et identique au radiateur existant (1x).

**5.** Dispositif (A) selon l'une des revendications précédentes,
**caractérisé en ce que**

- le nouveau répartiteur de frais de chauffage (3y), dont la c-valeur (c) stockée est la c-valeur ($c_{xxy}$, $c_{xyy}$, $c_{xzy}$) dérivée de l'autre dispositif de couplage thermique existant (Kxxx), est un appareil de remplacement d'un répartiteur de frais de chauffage (3x) à remplacer avec une plaque de montage (2y) nouvelle ou additionnelle qui a la même structure de surface (Sy) du côté dirigé vers le radiateur (1x) par rapport à la structure de surface (Sx) de la plaque de montage (2x) existante ou à remplacer et
- la c-valeur dérivée ($c_{xxy}$, $c_{xyy}$, $c_{xzy}$) du nouveau répartiteur de frais de chauffage (3y), servant d'appareil de remplacement, est dérivée de la c-valeur existante ($c_{xxx}$) du dispositif de couplage thermique existant (Kxxx).

**6.** Dispositif (A) selon l'une des revendications précédentes,
**caractérisé en ce que** la plaque de montage (2x, 2y, 2z) a au moins une structure de surface (Sx, Sy, Sz), notamment un profil, une élévation et/ou une forme, au moyen de laquelle elle est couplée thermiquement au radiateur (1x, 1y).

**7.** Dispositif (A) selon la revendication 6,
**caractérisé en ce que** la structure de surface (Sx, Sy) est un profil de surface sur un côté (2.1) de la plaque de montage (2x, 2y) qui est dirigé vers le radiateur (1).

**8.** Dispositif (A) selon l'une des revendications précédentes,
**caractérisé en ce que** le répartiteur de frais de chauffage (3x, 3y) comprend une électronique de mesure et au moins une mémoire destinée à stocker la c-valeur ou les c-valeurs ($c$, $c_x$, $c_y$) et/ou une interface de données destinée à l'échange de données.

**9.** Dispositif (A) selon l'une des revendications précédentes,
**caractérisé en ce que**

- la plaque de montage (2x, 2y, 2z) est conçue pour une installation mixte comprenant des plaques de montage existantes (2x) ou destinée à remplacer celles-ci, et/ou
- le répartiteur, ou les répartiteurs, de frais de chauffage (3x, 3y) est/sont conçu(s) pour une installation mixte comprenant des répartiteurs de frais de chauffage existants (3x) ou destinée à remplacer ceux-ci, et/ou
- la plaque de montage (2x, 2y, 2z) et les répartiteurs de frais de chauffage (3x, 3y) sont couplés entre eux et sont conçus pour une installation mixte comprenant des répartiteurs de frais de chauffage existants (3x) ou destinée à remplacer complètement ceux-ci.

10. Procédé de paramétrage d'un répartiteur de frais de chauffage (3x, 3y) pour déterminer une consommation de chaleur proportionnelle dans une unité d'utilisation ou une unité de facturation (6) sur la base d'une consommation de chaleur totale dans un bien immobilier, en particulier dans un immeuble (7),

- une pluralité de radiateurs (1x, 1y) et
- une pluralité de plaques de montage (2x, 2y, 2z) et
- une pluralité de répartiteurs de frais de chauffage (3x, 3y) et
- un certain nombre de dispositifs de couplage thermique (K1 à Kn), qui sont chacun formés à partir d'un radiateur (1x, 1y) et d'une plaque de montage (2x, 2y, 2z) montée sur celui-ci et d'un répartiteur de frais de chauffage (3x, 3y) monté du côté de la plaque de montage (2x, 2y, 2z) qui est opposé au radiateur (1x, 1y), étant prévus,
- une plaque de montage (2x, 2y, 2z) étant montée sur chaque radiateur (1x, 1y) et un répartiteur de frais de chauffage (3x, 3y) étant monté sur chaque plaque de montage (2x, 2y, 2z),
- au moins une c-valeur (cc) d'au moins un des dispositifs de couplage thermique (Kx(1)xx à Kx(n)xx) étant stockée dans chaque répartiteur de frais de chauffage (3x, 3y), la c-valeur respective ($c_x$) décrivant un couplage thermique entre le répartiteur de frais de chauffage respectif (3x), le radiateur respectif (1x(1) à 1x(n)) et la plaque de montage (2x) disposée entre eux,

**caractérisé en ce qu'**au moins une c-valeur ($c_{xxy}$, $c_{xyy}$, $c_{xzy}$) dérivée d'une c-valeur ($c_{xxx}$) de l'un des autres dispositifs de couplage thermique existants (Kxxx) est stockée comme c-valeur (c) dans un nouveau répartiteur de frais de chauffage (3y) d'au moins un nouveau dispositif de couplage thermique (Kxxy, Kxyy, Kxzy).

11. Procédé selon la revendication 10,
**caractérisé en ce que**
le nouveau répartiteur de frais de chauffage (3y), dont la c-valeur (c) est la c-valeur ($c_{xxy}$, $c_{xyy}$, $c_{yyy}$) dérivée des autres dispositifs de couplage thermique existants (Kxxx), est un appareil supplémentaire ou de remplacement d'un répartiteur de frais de chauffage (3x), remplacé ou à remplacer ou existant, qui comprend la même plaque de montage (2x).

12. Procédé selon la revendication 10 ou 11, **caractérisé en ce que**
le nouveau répartiteur de frais de chauffage (3y), dont la c-valeur (c) stockée est la c-valeur ($c_{xxy}$, $c_{xyy}$, $c_{xzy}$) dérivée de l'autre dispositif de couplage thermique existants (Kxxx), est un appareil de remplacement d'un répartiteur de frais de chauffage (3x), à remplacer ou existant, qui comprend une plaque de montage (2y) nouvelle et identique à la plaque de montage (2x) ou une plaque de montage (2z) nouvelle et identique au moins côté radiateur.

13. Procédé selon l'une des revendications 10 à 12,
**caractérisé en ce que** le répartiteur de frais de chauffage (3y), servant d'appareil de remplacement, est paramétré à l'aide de la c-valeur dérivée ($c_y$) et en particulier le mode de fonctionnement et le comportement de mesure de l'ancien répartiteur de frais de chauffage (3x) est simulé.

14. Utilisation d'un répartiteur de frais de chauffage (3) dans le dispositif selon l'une des revendications 1 à 9 pour déterminer une consommation de chaleur proportionnelle dans une unité d'utilisation sur la base d'une consommation de chaleur totale dans une unité de facturation (6), le répartiteur de frais de chauffage (3x, 3y) étant paramétré conformément au procédé selon l'une des revendications 10 à 13.

FIG 1A

FIG 1B

TABELLE

| Kopplungs-anordnung K | = verschiedene Kombinationen von alten und/oder neuen Komponenten |
|---|---|
| Kx(n)xx | = alte (vorhandene) thermische Kopplungsanordnungen K(1x(n), 2x, 3x) mit mindestens<br>- einem altem Heizkörper 1x(n),<br>- einer alten Montageplatte 2x und<br>- einem alten Heizkostenverteiler 3x |
| Kx(n)xy | = neue thermische Kopplungsanordnung K(1x(n), 2x, 3y) mit mindestens<br>- einem altem Heizkörper 1x(n),<br>- einer alten Montageplatte 2x und<br>- einem neuen Heizkostenverteiler 3y |
| Ky(n+1)xy | = neue thermische Kopplungsanordnung K(1y(n+1), 2x, 3y) mit mindestens<br>- einem neuen Heizkörper 1y(n+1),<br>- einer alten Montageplatte 2x und<br>- einem neuen Heizkostenverteiler 3y |
| Kx(n)yx | = neue thermische Kopplungsanordnung K(1x(n), 2y, 3x) mit mindestens<br>- einem alten Heizkörper 1x(n),<br>- einer neuen Montageplatte 2y und<br>- einem alten Heizkostenverteiler 3x |
| Kx(n)zx | = neue thermische Kopplungsanordnung K(1x(n), 2z, 3x) mit mindestens<br>- einem alten Heizkörper 1x(n), zumindest Heizkörperseitig identisch zu 2x<br>- einer neuen Montageplatte 2z und<br>- einem alten Heizkostenverteiler 3x |

FIG 1C

EP 3 828 524 B1

FIG 2

FIG 3

FIG 4

FIG 5A

1x(2), 8

S

2.5   2.1a   2.5

WL   WL

ST, KV   ST, KV

2.4   2.4

2x   2.1b   3x

Z
Y   X

## FIG 5B

3y

X
Y
Z

3.2

3.1

## FIG 6

K, Kx(n)xx $\longrightarrow$ K, Kx(n)xy

2x

1x(n)

3x

c, $c_{x(n)xx}$

2x

1x(n)

3y

$c_{x(n)xy} = f(c_{x(n)xx})$

## FIG 7A

$c_{x(n)xy} = f(c_{x(n)xx})$

KF

c, $c_{x(n)xy}$

c, $c_{x(n)xx}$

1x(3)

1x(n)

c, $c_{x(n)xx}$

1x(1)

1x(2)

c

## FIG 7B

**EP 3 828 524 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1592948 B1
- DE 102005032834 A1
- DE 19800041 A1